# EUROPÄISCHE PATENTSCHRIFT

(11) **EP 2 370 371 B1**
(45) Veröffentlichungstag und Bekanntmachung des Hinweises auf die Patenterteilung: **04.09.2013**
(21) Anmeldenummer: 09763856.3
(22) Anmeldetag: 24.11.2009
(51) Int. Cl.: C03C 17/23, C03C 21/00, C09C 1/00

(54) **EINGEFÄRBTE GLASPARTIKEL, VERFAHREN ZU DEREN HERSTELLUNG UND DEREN VERWENDUNG**
COLOURED GLASS PARTICLES, METHOD FOR THE PRODUCTION THEREOF AND USE THEREOF
PARTICULES DE VERRE COLORÉES, LEUR PROCÉDÉ DE FABRICATION ET LEUR UTILISATION

(30) Priorität: 29.11.2008 DE 102008059700
(43) Veröffentlichungstag der Anmeldung: 05.10.2011
(73) Patentinhaber: Eckart GmbH, 91235 Hartenstein (DE)
(72) Erfinder: TRUMMER, Stefan, 90480 Nürnberg (DE); SCHMIDT, Ulrich, 91217 Hersbruck (DE); SCHUMACHER, Dirk, 91257 Pegnitz (DE); KAUPP, Günter, 91284 Neuhaus (DE); WOLFRUM, Christian, 91052 Erlangen (DE)
(74) Vertreter: Walcher, Armin
(86) Internationale Anmeldenummer: PCT/EP2009/008347
(87) Internationale Veröffentlichungsnummer: WO 2010/060590

(56) Entgegenhaltungen:
- EP-A1- 1 602 632
- EP-A2- 1 837 379
- WO-A2-2008/125857
- DE-A1-102006 060 997
- HWANG S C ET AL: "Preparation method of high refractive index glass beads by ion exchange" WPI/THOMSON,, Bd. 2002, Nr. 64, 7. März 2002 (2002-03-07), XP002491176

## Beschreibung

Die vorliegende Erfindung betrifft eingefärbte Glaspartikel. Des Weiteren betrifft die Erfindung ein Verfahren zur Herstellung dieser eingefärbten Glaspartikel als auch deren Verwendung.

Die Färbung von Gebrauchsglas mit metallischen Nanopartikein und/oder Metalloxiden ist bekannt.

Die als Farbmittel zur Glasfärbung eingesetzten metallischen Nanopartikel weisen aufgrund ihrer typischerweise im Bereich von 1 bis 100 nm liegenden Partikelgröße gegenüber herkömmlichen Metallen vorteilhafte chemische und physikalische Eigenschaften, beispielsweise sehr hohe Absorptionskoeffizienten (Plasmonenabsorption) und eine breite Absorptionsbande im sichtbaren Bereich des elektromagnetischen Spektrums und somit eine intensive Farbe, auf.

Die auch als Farbmittel verwendeten Metalloxide weisen hingegen deutlich geringere Absorptionskoeffizienten auf.

Bei der herkömmlichen Färbung von Glas werden Metalle und/oder Metallsalze mit den übrigen zur Glasherstellung verwendeten Rohstoffen vor dem Schmelzvorgang gemischt. Übliche Rohstoffe zur Herstellung von Glas sind Quarzsand (SiO₂) als Netzwerkbildner, Natrium- und Kaliumcarbonat (Na₂CO₃, K₂CO₃) zur Erniedrigung des Schmelzpunktes, sowie Feldspat, Dolomit, Kalk und Altglas. Zur Verbesserung von bestimmten Eigenschaften werden teilweise Mennige, Borax oder Bariumcarbonat zugesetzt. Übliche Färbemittel zur Herstellung von farbigem Glas sind Oxide von Eisen (gelb bis braun), Kupfer (rot bis blau), Chrom (grün), Uran (gelb bis grün), Cobalt (blau), Nickel (rötlich), Mangan (braun) und Selen (rot).

Zur Glasfärbung mittels metallischer Nanopartikel werden Metalle oder Metallsalze der Elemente Silber (gelb), Kupfer (rot) und Gold (rot) den Ausgangsmaterialien zur Glasherstellung zugesetzt. Die Verwendung von Nanopartikeln aus Gold ist eine der ältesten Methoden zur Färbung von Glas, die bereits seit vielen hundert Jahren zur Herstellung von sogenanntem Goldrubinglas, z. B. für Kirchenfenster, Verwendung findet. Zur diesbezüglichen Glasherstellung werden die Ausgangsmaterialien in unterschiedlichsten Mengenverhältnissen gemischt. Beispiele für gebräuchliche Glaszusammensetzungen sind das sogenannte Kalk-Natron Glas (SiO₂ 72 %, Al₂O₃ 2 %, Na₂O 14%, CaO 10 %), Floatglas (SiO₂ 72 Al₂O₃ 1,5 %, Na₂O 13,5 %, CaO 8,5 %, MgO 3,5 %) oder Bleikristallglas (SiO₂ 60 %, Al₂O₃ 8 %, Na₂O 2 %, K₂O 12 %, PbO 17,5 %).

Die Rohmischung wird dem Schmelzprozess zugeführt. Dazu wird die Mischung in einem ersten Schritt solange erwärmt, bis die Materialien schmelzen, und anschließend werden die entstehenden Gase durch eine weitere Temperaturerhöhung ausgetrieben. Die geläuterte Glasschmelze wird sodann der Formgebung zugeführt.

Bei der herkömmlichen Glasfärbung können metallische Farbmittel, beispielsweise metallische Nanopartikel, nur bis zu einer Menge von ca. 0,1 Gewichtsprozent, bezogen auf die Gesamtmasse des Glases, von dem zu färbenden Glas aufgenommen werden, wie beispielsweise in der Dissertation von Thomas Rainer, Universität Halle, 2002 und der darin zitierten Literatur beschrieben ist.

Die metallische Farbmittel enthaltende Glasschmelze wird abgekühlt und durch eine anschließende Temperaturbehandlung gefärbt. Bei dieser Temperaturbehandlung bilden sich im Glas Nanopartikel, welche das Glas färben. Die Farbmittelzugabe zur Ausgangsmischung vor dem Schmelzen wird auch als primäre Dotierung bezeichnet. Bei dieser Methode der Glasfärbung sind die Farbmittel herstellungsbedingt gleichmäßig im gesamten Glasvolumen verteilt.

Bei einer weiteren bekannten Glasfärbung wird das Farbmittel erst nach dem Schmelzvorgang also in das erstarrte Glas durch Diffusionsprozesse eingebracht. Diese herkömmliche Methode zur Glaseinfärbung wird auch als sekundäre Dotierung bezeichnet. Dazu wird das einzufärbende Glas mit einer das Farbmittel, beispielsweise Metallsalze, enthaltenden Paste bestrichen. Während einer anschließenden Temperaturbehandlung diffundiert das Farbmittel aus der Paste in das Glas. Anschließend wird die Paste von dem abgekühlten Glas entfernt und durch eine weitere Wärmebehandlung das Glas durch die im Glas sich bildenden nanometrischen Metallpartikel gefärbt.

Eine andere Möglichkeit der sekundären Diffusion besteht darin, das zu färbende Glas mit den metallische Farbmitteln zu mischen und das mit aus der Mischung in das Glas diffundierten metallischen Farbmitteln dotierte Glas durch eine nachfolgende Wärmebehandlung zu färben. Ein solches Verfahren ist beispielsweise aus der WO 2008/125857 bekannt. Nachteiligerweise müssen bei diesem Verfahren sehr hohe Temperaturen angelegt werden, die zu einer partiellen Erweichung und infolgedessen zu einer partiellen Verformung der zu färbenden Glaspartikeln führt. Insbesondere bei Glasplättchen, die als Substrat zur Herstellung von Effektpigmenten, insbesondere Perlglanzpigmenten, verwendet werden, führen diese Verformungen des Substrates zu einer Verschlechterung der optischen Eigenschaften der daraus hergestellten Perlglanzpigmente. Mithin ist es nicht möglich qualitativ hochwertige Perlglanzpigmente auf Basis von gefärbten Glasplättchen herzustellen, die gemäß dem Verfahren der WO 2008/12857 hergestellt sind.

Weiterhin ist bekannt, Glas mittels hochenergetischer Strahlung mit metallischen Farbmitteln zu dotieren (lonenimplantation). Da dieses Verfahren jedoch sehr energieintensiv ist, wird es nicht in der industriellen Produktion eingesetzt. Ferner ist es mit diesem Verfahren nicht möglich, gefärbte Glaspartikel herzustellen.

Beispielsweise ist aus der DE 198 41 547 A1 eine Färbung von Gebrauchsglas mittels Laserbestrahlung bekannt. Zur Glasherstellung mit dauerhaft farbigen Strukturen wird das Glas mit Metallionen, wie beispielsweise Gold, Kupfer und Silber, dotiert und anschließend mittels Laserstrahlung, welche das Glas selbst nicht schädigen, die Metallionen durch lokale Energiezufuhr unter Oxidation von im Glas befindlichen Substanzen, reduziert. Die reduzierten Metalle bilden anschließend durch Agglomeration Nanopartikel, welche das Glas an den lokalen Stellen einfärben. Die Anwendung des Verfahrens kann nur bei flächigem Glas, jedoch nicht bei Glaspartikein erfolgen.

Weiterhin offenbart die DE 101 19 302 A1 ein Verfahren zum lasergestützten Eintrag von Metallionen durch lonenaustausch und Diffusion zum farbigen Innenbeschriften von Glas für Kennzeichnungs- und Werbungszwecke. Dazu wird die mit einem Metallionen enthaltenden Material kontaktierte Glasoberfläche mittels fokussierter Laserstrahlung lokal erwärmt, wodurch die Metallionen in das Glas diffundieren und zu Atomen reduziert werden. Durch eine anschließende Aggregation der Metallatome zu Metallpartikeln wird das Glas an den die Metallpartikeln enthaltenden Stellen gefärbt. Ein solches Verfahren ist jedoch ebenfalls nur bei flächigem Glas, d.h. nicht bei Glaspartikeln einsetzbar. Weiterhin befinden sich bei den so eingefärbten Glasscheiben die Metallnanopartikel nur in der äußersten Grenzschicht des Glases, d.h. eine gleichmäßige Glasfärbung in der Tiefe liegt nicht vor.

Die WO 2007/031151 A1 betrifft die Herstellung von farbigem Glas. Hierzu werden im Glas vorhandene oder eingebrachte Metallionen durch lokal begrenzten Energieeintrag mittels fokussierter Laserstrahlung reduziert und in eine lokal begrenzte Ansammlung von Metallpartikeln überführt, die eine lokale, für das eingesetzte Metall typische Verfärbung des Glases bewirken. Zur Herstellung mehrfarbiger Strukturen im Glas werden in einem ersten Schritt mehrere lokal begrenzte Bereiche mit einer monochromen Ausgangsfärbung unterschiedlicher Abstufungen derselben Farbe erzeugt und in einem zweiten Schritt durch einen variierbaren Energieeintrag in den Bereichen von der Ausgangsfärbung abhängige Partikelbildungs- und/oder -wachstumsprozesse induziert, wodurch die Glasbereiche mit unterschiedlicher Ausgangsfärbung eine unterschiedliche Farbe erhalten. Auch dieses Verfahren ist nicht für die Herstellung von eingefärbten Glaspartikeln geeignet.

Des Weiteren betrifft die JP 59199553 A ein mit Metalloxiden oder Metallpartikeln gefülltes Glas, welches nachfolgend ummantelt wird. Die Metalloxide sind beispielsweise Chromoxid und Kupferoxid, die Metallpartikel bestehen u. a. aus Silber und Gold. Die Metalloxide bzw. Metallpartikel werden dabei dem Ausgangsmaterial zugegeben und liegen somit nur in geringen Konzentrationen vor.

Die US 2003/0099834 A1 offenbart photochrome Glasnanopartikel, enthaltend Nanopartikel aus Silberhalogeniden, die bei Bestrahlung dunkel und nach Ende der Bestrahlung wieder hell werden. Die Partikel werden durch Fällung aus einer Mikroemulsion gefällt. Nachteilig an dem Verfahren ist, dass statt einer Farbigkeit nur ein hell-dunkel Effekt erzeugt wird. Des Weiteren eignet sich das Mikroemulsionsverfahren nicht zur Herstellung von eingefärbten Glaspartikeln.

Die DE 44 11 104 A1 betrifft ein Verfahren zur Herstellung von Purpurpigmenten auf der Basis von kolloidalem Gold auf einbrennfähigen Trägermaterialien, bei dem u. a. eine wässrige Lösung oder Suspension einer Goldverbindung und ein insbesondere aus Glasflüssen bestehendes Trägermaterial miteinander in Kontakt gebracht werden und anschließend das Gemisch bei einer Temperatur oberhalb der Zersetzungstemperatur der Goldverbindung und unterhalb der Sintertemperatur des Trägermaterials thermisch behandelt wird, wobei die Goldverbindung in kolloidales Gold überführt wird. Nachteilig an dem Verfahren ist jedoch, dass sich das Gold lediglich auf der Oberfläche des Substrates und nicht in seinem Inneren befindet, wodurch nachträgliche Beschichtungen sehr erschwert werden und zum anderen das Gold nicht durch das Glas vor mechanischer und/oder chemischer Beanspruchung geschützt ist.

Aus EP 1 510 506 B1 ist ein Glasflake mit einer speziellen Glaszusammensetzung und geringem Natriumanteil bekannt. Eine Glasbeschichtung aus Gold ist beispielhaft genannt. Nachteilig ist wiederum, dass sich das Gold an der Oberfläche und nicht im Inneren des Substrates befindet.

Die EP 1 837 379 A2 offenbart ein Verfahren zum Einfärben von Glasplättchen für den Einsatz als Füllstoffe in der Kosmetik. Hierzu werden anorganische Farbmittel, insbesondere Kationen oder komplexe Anionen der Elemente Kupfer, Chrom, Mangan, Eisen und Kobalt und/oder deren Kombination bzw. Titandioxid oder elementare Edelmetalle der Glasschmelze zugesetzt. Die eine Dicke von kleiner 1 Abmischungen mit Effektpigmenten in Farben, Lacken, Pulverlacken, Druckfarben, Kunststoffen und Trockenpräparaten, kosmetischen Formulierungen und in der pflegenden und dekorativen Kosmetik sowie in lipophilen, hydrophilen oder hydrophoben Formulierungen einsetzbar. Die Farbmittel werden dabei der Ausgangsmischung zugegeben, die nachfolgend zur Herstellung des gefärbten Glases geschmolzen wird. Diese bekannte Glasfärbung weist den wesentlichen Nachteil auf, dass das in die Glasschmelze eingebrachte Metall nur bis zu etwa 0,1 Gew,-% in dieser löslich ist. Die in der EP 1 837 379 A2 angegebenen Mengenangaben von 0,1-50 Gew.-% an Farbmittel in den Glasplättchen, die aus einer entsprechend eingefärbten Glasschmelze erhalten sein sollen, sind nicht zutreffend. Durch Zugabe von Metallverbindungen zur Glasschmelze von Gläsern mit einem SiO₂ Gehalt größer 50 % können nur Gläser mir einer maximalen Metallkonzentration von 0,1 % erzeugt werden. Bei einer höheren Metallkonzentration in der Glasschmelze kommt es zu Metaliabscheidungen in der Glasschmelze. Aufgrund der geringen Dicke der Glaspigmente ist eine Konzentration von 0,1 Gew.-% an Färbungsmittel nicht ausreichend, um intensive gefärbte Glaspigmenten bzw. intensive Farben zu erzeugen. Dieses bekannte Verfahren ist daher zur Herstellung von intensiv gefärbtem Glas ungeeignet.

Die DE 10 2006 060 997 A1 betrifft Perlglanzpigmente auf Basis von beschichteten plättchenförmigen Substraten

Nachteiligerweise lassen sich bislang keine intensiv farbigen Glaspartikel herstellen an denen jedoch ein großes wirtschaftliches Interesse besteht und ein bisher unbefriedigter Bedarf vorhanden ist.

Aufgabe der vorliegenden Erfindung ist es, farbige Glaspartikel, insbesondere farbige Glasplättchen, mit einer bisher nicht erreichten Farbintensität und Farbenvielfalt bereitzustellen. Diese farbigen Glaspartikel, insbesondere farbige Glasplättchen, sollen zudem eine gute mechanische Stabilität und chemische Beständigkeit aufweisen sowie vielseitig verarbeitbar sein, beispielsweise mit bekannten nasschemischen Beschichtungsverfahren beschichtbar sein.

Eine weitere Aufgabe der Erfindung ist es, ein einfaches Verfahren zur Herstellung von farbigen Glaspartikeln mit einer bisher nicht erreichten Farbintensität und Farbenvielfalt bereitzustellen.

Die der Erfindung zugrundeliegende Aufgabe wird durch Bereitstellung von mit wenigstens einem Farbmittel eingefärbten Glaspartikel gemäß Anspruch 1 gelöst.

Bevorzugte Weiterbildungen der Erfindung sind in den Unteransprüchen 2 bis 9 angegeben.

Weiterhin wurde die Aufgabe gelöst durch Bereitstellung eines Verfahrens, welches die Herstellung stark eingefärbter Glaspartikel ermöglicht.

Das erfindungsgemäße Verfahren zur Herstellung von eingefärbten Glaspartikeln umfasst folgende Schritte:
(a) Inkontaktbringen von Alkalioxid-haltigen Glaspartikein mit einer färbenden Metallsalzschmelze, wobei die färbende Metallsalzschmelze wenigstens ein färbendes Metallsalz und wenigstens ein den Schmelzpunkt des färbenden Metallsalzes absenkendes Mittel enthält und die Temperatur der färbenden Metallsalzschmelze unterhalb der Schmelztemperatur der Glaspartikel liegt, für einen ausreichenden Zeitraum unter Erhalt von eingefärbten Glaspartikeln,
(b) Abtrennen der in Schritt (a) erhaltenen eingefärbten Glaspartikel von der färbenden Metallsalzschmelze,
(c) optional Waschen der in Schritt (b) abgetrennten eingefärbten Glaspartikel,
(d) optional Trocknen der in Schritt (c) gewaschenen eingefärbten Glaspartikel,
(e) optional Erwärmen der in Schritt (b), (c) oder (d) erhaltenen eingefärbten Glaspartikel und
(f) optional Abkühlen und Waschen der in Schritt (e) erwärmten eingefärbten Glaspartikel.

Bevorzugte Weiterbildungen des erfindungsgemäßen Verfahrens sind in den Unteransprüchen 11 bis 15 angegeben.

Die der Erfindung zugrundeliegende Aufgabe wird des weiteren durch Bereitstellung eines Mittels, insbesondere eines Effektpigmentes, einer Farbe, Druckfarbe, eines Lackes, Beschichtungsmittels, Pulverbeschichtungsmittels, Kunststoffs, einer Keramik, eines dekorativen und/oder pflegenden Kosmetikums, einer landwirtschaftlichen Folie, Nahrungsmittelverpackung, von Schmuck, eines Kunstgegenstandes, von Dekorationsartikeln gelöst, wobei das Mittel eingefärbte Glaspartikel nach einem der Ansprüche 1 bis 9 enthält oder aufweist.

Die der Erfindung zugrundeliegende Aufgabe wird des Weiteren durch Bereitstellung eines Gegenstands gelöst, wobei der Gegenstand mit eingefärbten Glaspartikeln gemäß einem der Ansprüche 1 bis 9 oder mit einem Mittel gemäß Anspruch 29 versehen ist oder eingefärbte Glaspartikel aufweist.

Der Gegenstand kann aus der Gruppe ausgewählt werden, die aus Karosserie, Fassadenverkleidung, Verpackungen, Papier, Pappe, Folie, Keramik, Schmuck, etc. besteht.

Im Sinne der Erfindung werden unter "eingefärbten" Glaspartikeln, beispielsweise eingefärbte Glasplättchen, auch "latent gefärbte" Glaspartikel, beispielsweise latent gefärbte Glasplättchen verstanden. Unter "latent gefärbten" Glaspartikeln, beispielsweise latent gefärbten Glasplättchen, ist zu verstehen, dass die Färbung nur schwach oder noch nicht erkennbar ist, jedoch durch eine geeignete Nachbehandlung, beispielsweise durch Beaufschlagung mit Wärme sichtbar wird.

Unter "plan" bzw. "planen eingefärbten Glasplättchen" wird im Sinne der Erfindung verstanden, dass die eingefärbten Glasplättchen keine Verformungen, insbesondere keine Dellen, Erhöhungen, Knicke, Faltungen, Verschiebungen, etc., in der Fläche aufweisen. Die erfindungsgemäßen eingefärbten Glasplättchen zeichnen sich mitunter dadurch aus, dass die obere und die unter Fläche der Glasplättchen weitgehend planparallel zueinander eingeordnet sind. Vorzugsweise sind die obere und untere Fläche der eingefärbten Glasplättchen zueinander planparallel angeordnet. Eine etwaige Abweichung von der Planparallelität kann lediglich dann gegeben sein, wenn die obere und untere Fläche der Glasplättchen vor der Einfärbung nicht planparallel zueinander angeordnet sind. Eine solche etwaige Abweichung ist jedoch keine Verformung wie vorstehend erläutert.

Die Erfinder haben überraschend festgestellt, dass die Bereitstellung von eingefärbten Glaspartikeln, insbesondere von eingefärbten planen Glasplättchen, mit einer ausgezeichneten Farbintensität in vielfältigen Farbvariationen sowie einer guten mechanischen Stabilität und chemischen Beständigkeit möglich ist. Äußerst überraschend ist dabei, dass eine hohe Farbintensität bei Glaspartikeln, insbesondere bei Glasplättchen, erreicht werden kann, da diese nur ein geringes Volumen oder eine geringe Schichtdicke aufweisen.

Um diese hohe Farbintensität bei Glaspartikeln, insbesondere bei Glasplättchen, mit geringem Volumen oder geringer Schichtdicke zu erreichen, muß das Farbmittel in den Glaspartikeln, insbesondere in den Glasplättchen, eine hohe Konzentration aufweisen.

Die erfindungsgemäßen eingefärbten Glaspartikel werden in zwei Stufen hergestellt. Zunächst werden die Glaspartikeln aus einer Glasschmelze über herkömmlich bekannte Verfahren z.B. aus der EP 0 289 240 B1 oder WO 2004/056716 hergestellt, ohne dass Farbmittel der Glasschmelze hinzugefügt werden. Die so hergestellten Glaspartikel werden nachfolgend mit den gewünschten Farbmitteln eingefärbt.

Diese Vorgehensweise bietet gegenüber der direkten Färbung der Glasschmelze und der nachfolgenden Herstellung von gefärbten Glaspartikeln mehrere Vorteile.

Zum einen werden die physikalischen Eigenschaften, beispielsweise die Viskosität oder die Oberflächenspannung, der Glasschmelze nicht durch Zusätze von Farbmitteln verändert. Daher können die Verfahren zur Erzeugung der gewünschten Glaspartikel, insbesondere von Glasplättchen, beispielsweise mit einer bestimmten Partikelgrößenverteilung, Schichtdicke, etc., unverändert unter Erhalt der gewünschten Qualität der herzustellenden Glaspartikel durchgeführt werden. Des Weiteren kommt es zu keiner Verunreinigung der Vorrichtung mit einem Farbmittel, in der die Glasschmelze erzeugt und nachfolgend die gewünschten Glaspartikel, insbesondere Glasplättchen, hergestellt werden.

Die erfindungsgemäß bereitgestellten eingefärbten Glaspartikel unterscheiden sich strukturell von gefärbten Glaspartikeln aus dem Stand der Technik unter anderem durch die hohe Konzentration an Farbmittel in den Glaspartikeln. Überraschenderweise können auf Basis der vorliegenden Erfindung größere Konzentrationen an Farbmittel in die Glaspartikel eingebracht werden, als dies bei der direkten Färbung von Glasschmelzen und der nachfolgenden Herstellung von Glaspartikeln der Fall ist.

Der Grund für diesen Effekt ist bislang noch nicht geklärt. Es wird vermutet, dass die Kapazität einer Glasschmelze, Farbmittel aufzunehmen, geringer ist als die Kapazität von festen Glaspartikeln, mithin von einer unterkühlten Schmelze.

Ein weiterer struktureller Unterschied zu gefärbten Glaspartikeln aus dem Stand der Technik liegt darin, dass die erfindungsgemäßen eingefärbten Glasplättchen plan sind, d.h. keine Verformungen, insbesondere keine Dellen, Erhöhungen, Knicke, Faltungen, Verschiebungen, etc., in der Fläche aufweisen.

Bei Einfärbung von Glaspartikeln gemäß dem Verfahren der WO 2008/125857 werden die Glaspartikel mit einem Färbesalz bei Temperaturen 550°C bis 650°C über einen Zeitraum von mehreren Stunden, üblicherweise von etwa 4 bis etwa 7 hrs, behandelt. Aufgrund der hohen Temperaturen und der langen Behandlungsdauer kommt es zu (partiellen) Erweichungen der Glasplättchen. Diese (partiellen) Erweichungen führen zu partiellen Verformungen. Diese Verformungen können punktuell sein oder zu Knicken oder Kanten in der Fläche der eingefärbten Glasplättchen führen. Die Verformungen kommen beispielsweise dadurch zustande, dass die einzufärbenden Glasplättchen bei der Erwärmung übereinanderliegen und aufgrund der (partiellen) Erweichung der Glasplättchen diese sich gegenseitig verformen, indem beispielsweise der Randbereich eines ersten Glasplättchens sich in die Fläche eines zweiten Glasplättchens eindrückt und letzteres verformt. Dellen bzw. Erhöhungen können dadurch erzeugt werden, dass die Ecke eines ersten Glasplättchens sich in die Fläche eines zweiten Glasplättchens eindrückt.

Die erfindungsgemäßen eingefärbten Glasplättchen weisen im Wesentlichen keine Verformungen, vorzugsweise keine Verformungen auf. Die erfindungsgemäßen eingefärbten Glasplättchen weisen im Wesentlichen nur bereits vor dem Einfärben vorhandene Krümmungen auf, vorzugsweise sind die erfindungsgemäßen eingefärbten Glasplättchen flach.

Die Bereitstellung dieser planen eingefärbten Glasplättchen wird durch das erfindungsgemäße Verfahren ermöglicht. Das erfindungsgemäße Verfahren zeichnet sich unter anderem durch eine tiefere, anzulegende Temperatur und eine wesentlich kürzere Verfahrensdauer aus. Aufgrund der niedrigeren Temperatur und der wesentlich kürzeren Verfahrensdauer erweichen die Glaspartikel, insbesondere die Glasplättchen nicht bzw. nicht signifikant, so dass es nicht zu den Verformungen wie bei den aus dem Stand der Technik bekannten Verfahren kommt.

Die erfindungsgemäßen eingefärbten Glasplättchen sind gemäß einer bevorzugten Ausführungsform dadurch gekennzeichnet, dass der Konzentrationsverlauf an Farbmittel im eingefärbten Glasplättchen über die Dicke des eingefärbten Glasplättchens weniger als 10 Gew.-%, vorzugsweise weniger als 5 Gew.-%, abfällt, konstant ist oder in bezug auf den Randbereich des Glasplättchens im Inneren des Glasplättchens erhöht ist. Unter Randbereich werden hierbei die obere und untere Außenfläche des Glasplättchens verstanden.

Bevorzugt ist, dass es über die Dicke des Glasplättchens zu keinem wesentlichen, vorzugsweise zu keinem, Abfall bei der Konzentration des Farbmittels kommt. Mithin ist die Konzentration an Farbmittel über die Dicke des Glasplättchens gemäß einer bevorzugten Ausführungsform der Erfindung im wesentlich konstant, vorzugsweise konstant.

Gemäß einer weiteren bevorzugten Ausführungsform der Erfindung kommt es über die Dicke des Glasplättchens wenigstens zu einem Konzentrationsanstieg von den beiden Außenflächen zum Inneren des Glasplättchens, vorzugsweise in Form wenigstens eines Peaks, an Farbmittel über die Dicke des Glasplättchens. Gemäß einer bevorzugten Ausführungsform der Erfindung liegt in dem Glasplättchen eine Konzentration an Farbmittel vor, die um bis zu 3 Gew.-%, vorzugsweise um bis zu 5 Gew.-%, noch weiter bevorzugt um bis zu 8 Gew.-%, über der Konzentration des Farbmittels an der Außenflächen der Glasplättchen liegt.

Die erfindungsgemäßen eingefärbten Glaspartikel in Form von Glasplättchen weisen dabei vorzugsweise ein Konzentrationsverlauf auf, bei dem die Konzentration an Farbmittel von den Außenflächen über die Dicke des Glasplättchens in Richtung Inneren bzw. Dickenzentrum des Glasplättchens unter Ausbildung wenigstens eines Konzentrationspeaks ansteigt. Dabei kann es über die Dicke des Glasplättchens auch zur Ausbildung von mehr als einem Konzentrationspeak an Farbmittel kommen, beispielsweise zum Auftreten von zwei, drei, vier oder mehr Konzentrationspeaks. Überraschend ist mithin, dass die Konzentration an Farbmittel an den Außenflächen des Glasplättchens geringer sein kann als im Inneren der Glasplättchen.

Bislang ist nicht geklärt, warum es zu einer Erhöhung bei der Konzentration des Farbmittels im Innern des Glasplättchens, verglichen mit den Außenflächen des Glasplättchens, kommt.

Die Farbmittel, insbesondere bei Farbgebung mittels Silberoxid und/oder Kupferoxid oder nanopartikulärem Silber und/oder Kupfer, sind in den eingefärbten Glasplättchen in einer Menge aus einem Bereich von 1 bis 55 Gew.-%, bevorzugt von 1,5 bis 50 Gew.-%, weiter bevorzugt von 2 bis 40 Gew.-% und besonders bevorzugt von 2,5 bis 35 Gew.-% im eingefärbten Glasplättchen vorhanden. Gemäß einer weiteren Variante der Erfindung liegt der Gehalt an Farbmittel in dem Glasplättchen in einem Bereich von 3 bis 34 Gew.-%, weiter bevorzugt von 3,5 bis 32 Gew.-%.

Weiterhin ist bevorzugt, dass der Gehalt an Farbmittel, insbesondere bei Farbgebung mittels Silberoxid oder nanopartikulärem Silber, in einem Bereich von 11 bis 55 Gew.-%, weiter bevorzugt von 17 bis 45 Gew.-%, noch weiter bevorzugt von 21 bis 37 Gew.-%, liegt.

Diese Konzentrationsangaben beziehen sich stets auf das Gesamtgewicht der eingefärbten Glaspartikel.

Unterhalb von 1 Gew.-% ist die Farbstärke nicht ausreichend hoch. Mehr als 55 Gew.-% Farbmittelanteil konnten bislang nicht hergestellt werden.

Die Erfinder vermuten, dass die hohen Konzentrationen an Farbmittel(n) in den erfindungsgemäßen eingefärbten Glaspartikeln auf einen Austausch von Metall(en), Metallion(en) und/oder Metalloxid(en) gegen Alkaliionen in den Glaspartikeln zurückzuführen sind. Der Alkaligehalt von Gläsern ist jedoch begrenzt, so dass hierdurch auch das Aufnahmevermögen der Glaspartikel in Bezug auf das oder die Farbmittel begrenzt ist. Ohne an eine Theorie gebunden sein zu wollen, wird angenommen, dass die maximal mögliche Konzentration an Farbmittel in einem Glaspartikel von dem Gehalt an Alkaliionen in dem Glaspartikel vor der Einfärbung abhängt. Je höher der Alkaliionengehalt, desto höher wird vermutlich das Aufnahmevermögen für Farbmittel sein.

Bevorzugt liegen die Farbmittel in den erfindungsgemäßen Glasplättchen als metallische Nanopartikel vor.

Die metallischen Nanopartikel weisen in den erfindungsgemäßen Glasplättchen bevorzugt eine mittlere Größe von 1 bis 200 nm, weiter bevorzugt von 1,5 bis 190 nm und besonders bevorzugt von 2 bis 150 nm auf. Als sehr geeignet haben sich auch metallische Nanopartikel in einem Größenbereich mit einer mittleren Größe von 5 bis 100 nm oder von 10 bis 50 nm erwiesen.

Unterhalb einer mittleren Größe von 1 nm können die metallischen Nanopartikel nicht genügend farbintensiv und nicht mehr chemisch stabil genug sein, um zuverlässig verwendet zu werden.

Oberhalb einer mittleren Größe von 200 nm der metallischen Nanopartikel kann es sein, dass die Glasstruktur weitgehend aufgebrochen wird und die Glasplättchen ihre spezifische Form verlieren oder zu spröde werden.

Die metallischen Nanopartikel weisen in den eingefärbten Glasplättchen bevorzugt eine annähernd sphärische oder stäbchenförmige Form auf.

Bevorzugt werden die metallischen Nanopartikel aus der Gruppe, die aus Gold, Silber, Kupfer, Eisen, Chrom, Cobalt, Nickel, Platin, Legierungen dieser Metalle, Mischungen dieser Metalle und Kern-Mantel-Partikel dieser Metalle, die auch als Core-Shell Partikel dieser Metalle bezeichnet werden, ausgewählt.

Besonders bevorzugt werden metallische Nanopartikel aus der Gruppe, die aus Gold, Silber, Kupfer, Legierungen dieser Metalle, Mischungen dieser Metalle und Kern-Mantel-Partikel dieser Metalle (Core-Shell Partikel dieser Metalle) besteht, ausgewählt. Die vorgenannten Metalle besitzen aufgrund ihrer so genannten Plasmonenabsorption sehr hohe Absorptionskoeffizienten, die eine intensive Einfärbung von Glaspartikeln ermöglichen.

Bei einer weiteren bevorzugten Ausführungsform der Erfindung werden zur Einfärbung der Glasplättchen Metalloxide eingesetzt. Die verwendeten Metalloxide sind mithin farbig, farbgebend oder können in farbige Metallverbindungen, beispielsweise durch Wärmebehandlung, überführt werden.

Gemäß einer bevorzugten Ausführungsform werden als Metalloxide die Oxide von Metallen aus der Gruppe, die aus Gold, Silber, Kupfer, Eisen, Chrom, Cobalt, Nickel, Platin, Legierungen dieser Metalle und Mischungen dieser Metalle besteht, verwendet.

Äußerst bevorzugt werden Silberoxid, Kupferoxide, Chromoxide und/oder Cobaltoxide verwendet.

Trotz der geringeren Absorption von Metalloxiden, verglichen mit der Absorption von metallischen Nanopartikeln, können mit Metalloxiden - aufgrund von deren hohen Konzentration und des Konzentrationsprofils in den Glasplättchen - intensiv eingefärbte bzw. farbige Glasplättchen hergestellt werden.

Die erfindungsgemäßen eingefärbten Glasplättchen können direkt als Farbpigmente verwendet werden oder können als Substrat zur Herstellung von erfindungsgemäßen Effektpigmenten verwendet werden. Die aus den eingefärbten Glassplättchen hergestellten Effektpigmente sind ein wesentlicher Gegenstand der vorliegenden Erfindung.

Die mit Farbmitteln eingefärbten Glasplättchen weisen vorzugsweise Durchmesser aus einem Bereich von 1,5 bis 450 µm, bevorzugt von 2 bis 400 µm und besonders bevorzugt von 2,5 bis 350 µm auf. Als sehr geeignet haben sich auch eingefärbte Glasplättchen mit einem Durchmesser von 5 bis 200 µm, oder von 10 bis 100 µm, von 10 bis 35 µm oder 1 bis 15 µm.

Gemäß einer bevorzugten Weiterbildung der Erfindung liegen die eingefärbten Glasplättchen in bezug auf den Durchmesser der Glasplättchen in einer Partikelverteilung vor, wobei der Anteil der planaren Glasplättchen in der Fraktion ≥ D₃₀ bis D₁₀₀ der Partikelverteilung wenigstens 50 %, bezogen auf die Anzahl sämtlicher Glasplättchen in der Fraktion ≥ D₃₀ bis D₁₀₀, beträgt.

Weiterhin ist bevorzugt, dass der Anteil der planaren Glasplättchen in der Fraktion ≥ D₃₀ bis D₁₀₀ der Partikelverteilung wenigstens 60 %, vorzugsweise wenigstens 70 %, weiter bevorzugt wenigstens 80 %, noch weiter bevorzugt wenigstens 90 %, noch weiter bevorzugt wenigstens 95 %, noch weiter bevorzugt wenigstens 99 %, bevorzugt 100 %, bezogen auf die Anzahl sämtlicher Glasplättchen in der Fraktion ≥ D₃₀ bis D₁₀₀, beträgt.

Bevorzugt ist, dass die Partikelverteilung einen D10 ≥ 1 µm und einen D₉₀≤ 500 µm aufweist.

Gemäß einer weiteren bevorzugten Ausführungsform liegt der D₁₀ in einem Bereich von 1,5 µm bis 90 µm, weiter bevorzugt von 2 µm bis 80 µm. Weiter bevorzugt liegt der D₁₀ in einem Bereich von 4 bis 60 µm.

Gemäß einer weiteren bevorzugten Ausführungsform liegt der D₅₀ in einem Bereich von 5 µm bis 500 µm, weiter bevorzugt von 10 µm bis 250 µm. Weiter bevorzugt liegt der D₅₀ in einem Bereich von 30 bis 110 µm.

Gemäß einer weiteren bevorzugten Ausführungsform liegt der D₉₀ in einem Bereich von 10 µm bis 500 µm, weiter bevorzugt von 20 µm bis 400 µm. Weiter bevorzugt liegt der D₉₀ in einem Bereich von 35 bis 220 µm.

Gemäß einer bevorzugten Ausführungsform liegt der D₁₀ in einem Bereich von 4 bis 60 µm, der D₅₀ in einem Bereich von 30 bis 110 µm und der D₉₀ in einem Bereich von 35 bis 220 µm.

Unter einem D₁₀-Wert wird verstanden, dass 10 % aller Glasplättchen einen Durchmesser aufweisen, der dem angegebenen Wert entspricht oder darunter liegt. Anders ausgedrückt, weisen 90 % der Glasplättchen einen Durchmesser auf, der oberhalb des angegebenen Wertes liegt.

Bei dem D₅₀-Wert weisen 50 % der Glasplättchen einen Durchmesser auf, der gleich oder geringer als der angegebene Wert ist, wobei die verbleibenden 50 % oberhalb des angegebenen Wertes liegen. Entsprechend gibt der D₉₀-Wert an, dass 90 % der Partikel einen Durchmesser aufweisen, der dem angegebenen Wert entspricht oder kleiner als der angegebene Wert ist.

Die Größenverteilung wird üblicherweise über Lasergranulometrie bestimmt.

Weiterhin weisen die mit Farbmitteln eingefärbten Glasplättchen vorzugsweise eine mittlere Dicke aus einem Bereich von 30 bis 3000 nm, bevorzugt 50 bis 2500 nm, besonders bevorzugt von 70 bis 2000 nm und ganz besonders bevorzugt von 80 bis unter 1500 nm, auf. Als sehr geeignet haben sich auch eingefärbte Glasplättchen mit einer mittleren Dicke von 100 bis 300 nm oder von 120 bis 250 nm erwiesen.

Insbesondere dünne Glasplättchen mit einer mittleren Dicke unterhalb von ca. 1.000 nm konnten aufgrund der geringen Dicke bisher in nicht befriedigender Weise intensiv eingefärbt werden. Insbesondere metallische Nanopartikel konnten bislang nicht in ausreichend hoher Menge in solche Glasplättchen eingebracht werden, um eine intensive Einfärbung zu ermöglichen.

Nach dem Lambert-Beerschen Gesetz ist die Extinktion proportional zur Schichtdicke und zur Konzentration der Farbmittel. Daraus folgt, dass insbesondere bei geringen Schichtdicken hohe Konzentrationen an Farbmittel nötig sind, um ausreichend hohe Extinktionen und damit Einfärbungen zu erreichen.

Bevorzugt werden Glasplättchen mit einer Standardabweichung in der Dickenverteilung geringer als 20 %, vorzugweise weniger als 15 % und besonders bevorzugt weniger als 10 %, eingesetzt. Es hat sich herausgestellt, dass eine besonders farbreine Präparationen aus oder mit eingefärbten Glasplättchen erhalten werden können, wenn die intensiv eingefärbten Glasplättchen eine möglichst geringe Abweichung in der Dickenverteilung aufweisen.

Besonders bevorzugt werden zur Einfärbung mit den Farbmitteln Glaspartikel, vorzugsweise Glasplättchen, verwendet, die vorzugsweise 30 bis 80 Gew.-% Siliziumoxid und/oder vorzugsweise 5 bis 20 Gew.-% Alkalioxide bezogen auf das Gewicht des Glaspartikels, bevorzugt Glasplättchens, enthalten.

Wie oben erläutert, wird seitens der Erfinder vermutet, dass es während der Einfärbung zu einem Austausch von Alkaliionen, aus dem Ausgangsglasmaterial gegen Metall(e), Metallion(en) und/oder Metalloxid(en) kommt.

Die erfindungsgemäßen eingefärbten Glaspartikel, vorzugsweise eingefärbten Glasplättchen, zeichnen sich mithin dadurch aus, dass der Gehalt an Alkaliionen, insbesondere der Natriumionen, verringert ist, verglichen mit dem Alkalionengehalt, insbesondere mit dem Natriumionengehalt, des Ausgangsglasmateriales.

Gemäß einer bevorzugten Ausführungsform der Erfindung liegt der Gehalt an Alkalioxid in den eingefärbten Glaspartikeln in einem Bereich von 0 bis 15 Gew.-%, vorzugsweise von 0,05 bis 12 Gew.-%, weiter bevorzugt von 0,08 bis 8 Gew.-%, noch weiter bevorzugt von 0,1 bis 3,5 Gew.-%, noch weiter bevorzugt von 0,13 bis 1 Gew.-%, noch weiter bevorzugt von 0,15 bis 0,5 Gew.-%, jeweils bezogen auf das Gesamtgewicht der eingefärbten Glaspartikel. Gemäß einer äußerst bevorzugten Ausführungsform ist der Gehalt an Alkaliionen, insbesondere von Na-Ionen, nahezu null, vorzugsweise null.

Mithin weisen die erfindungsgemäßen eingefärbten Glaspartikel, insbesondere eingefärbten Glasplättchen, eine unübliche Glaszusammensetzung auf, da der Alkalüonengehalt, insbesondere der Natriumionengehalt, stark verringert ist, jedoch die weiteren Bestandteile in ihren absoluten Mengen, beispielsweise die absolute Menge an SiO₂, Al₂O₃,B₂O₃, CaO, PbO, TiO₂, etc., soweit bei der jeweiligen Glasart vorhanden ist, im wesentlichen unverändert, vorzugsweise unverändert, sind, bezogen jeweils auf die jeweils absolute Menge im Ausgangsmaterial.

Es hat sich herausgestellt, dass bei einem Siliziumoxidgehalt von 30 bis 80 Gew.-%, vorzugsweise von 35 bis 75 Gew.-%, im Glasausgangsmaterial die eingefärbten Glaspartikel, vorzugsweise eingefärbten Glasplättchen, nach der Einfärbung über eine sehr gute mechanische Festigkeit sowie chemische Beständigkeit verfügen. Die Alkaliionen werden bevorzugt aus der Gruppe, die aus Natrium-, Kalium- und/oder Lithiumionen, besteht, ausgewählt. Gemäß einer sehr bevorzugten Ausführungsform handelt es sich bei den Alklaüonen um Natriumionen.

Weiter bevorzugt enthalten die erfindungsgemäß als Ausgangsmaterial zu verwendenden Glaspartikel, vorzugsweise Glasplättchen, 3 bis 25 Gew.-% Aluminiumoxid und/oder 5 bis 30 Gew.-% Kalziumoxid, jeweils bezogen auf das Gesamtgewicht des Glaspartikels, vorzugsweise Glassplättchens, vor der Einfärbung.

Das Ausgangsglasmaterial wird bevorzugt aus der Gruppe ausgewählt, die aus Kalk-Natron-Glas, Floatglas, Bleikristallglas, Laborglas, Emaille und Mischungen davon besteht. Beispielhafte, bei der vorliegenden Erfindung verwendbare Glaszusammensetzungen sind in Tabelle 1 angegeben, wobei die in Tabelle 1 je Glasart angegebenen Werte für die jeweiligen Oxide, soweit vorhanden, in bezug auf den Gehalt:
- von SiO₂ um bis zu ± 8 Gew.-%, vorzugsweise um bis zu ± 5 Gew.-%,
- von Al₂O₃ um bis zu ± 1,5 Gew.-%, vorzugsweise um bis zu ± 1 Gew.-%,
- von (Na₂O+K₂O) in der Summe insgesamt um bis zu ± 4 Gew.-%, vorzugsweise um bis zu ± 3 Gew.-%,
- von MgO um bis zu ± 1 Gew.-%, vorzugsweise um bis zu ± 0,5 Gew.-%,
- von CaO um bis zu ± 4 Gew.-%, vorzugsweise um bis zu ± 2 Gew.-%,
- von B₂O₃ um bis zu ± 2 Gew.-%, vorzugsweise um bis zu ± 1 Gew.-%,
- von PbO um bis zu ± 6 Gew.-%, vorzugsweise um bis zu ± 3 Gew.-%,
- von TiO₂ um bis zu ± 4 Gew.-%, vorzugsweise um bis zu ± 2 Gew.-%,
- von F um bis zu ± 4 Gew.-%, vorzugsweise um bis zu ± 2 Gew.-%, variieren können.

**Tabelle 1. Zusammensetzungen verschiedener Glasarten**

| **Glasart** | **SiO₂** | **Al₂O₃** | **Na₂O** | **K₂O** | **MgO** | C**aO** | **B₂O₃** | **PbO** | **TiO₂** | **F** |
|---|---|---|---|---|---|---|---|---|---|---|
| Kalk-Natron-Glas | 72% | 2% | 14 % | - | - | 10 % | - | - | - | |
| Floatglas | 72% | 1,5% | 13,5 % | - | 3,5 % | 8,5 % | - | - | - | |
| Bleikristallglas | 58 % | - | 4% | 9% | - | - | 2% | 24% | - | |
| Laborglas | 80% | 3% | 4% | 0,5% | - | - | 12,5 % | - | - | |
| Emaille | 40% | 1,5% | 9% | 6% | 1% | - | 10% | 4% | 15% | 13 % |

| | | | | | | | | | | |
|---|---|---|---|---|---|---|---|---|---|---|
| Die Angaben in [%] bedeuten [Gew.-%], jeweils bezogen auf das Gesamtgewicht. Neben den angegebenen Bestandteilen können auch weitere Komponenten oder etwaige Verunreinigungen enthalten sein. Die Summe sämtliche Komponenten einschließlich etwaiger Verunreinigungen ergibt je Glasart 100 Gew.-% | | | | | | | | | | |

Die Herstellung der Glasplättchen, die gemäß der vorliegenden Erfindung eingefärbt werden, erfolgt mit dem Fachmann geläufigen Verfahren, welche beispielsweise in der WO 2007/140897, EP 1 837 379 A2, EP 0 289 240 A1 oder WO 2005/063627 A1 beschrieben sind, deren Inhalt hiermit unter Bezugnahme aufgenommen wird.

Der Erfindungsgegenstand umfasst auch die Verwendung der erfindungsgemäßen mit Farbmitteln eingefärbten Glassplättchen mit hoher Farbintensität, vorzugsweise mit einer oder mehreren Beschichtung(en), vorzugsweise anorganische(n) und/oder organisch-chemische(n) Oberflächenbeschichtung(en).

Gemäß einer Ausführungsform der Erfindung ist bevorzugt, dass die mindestens eine Beschichtung ein Material oder mehrere Materialien, die aus der Gruppe, die aus Metallen, Metallchalkogeniden, insbesondere Metalloxiden, Metallhydroxiden, Metallsuboxiden, Metalloxidhydraten, Metallsulfiden, sowie Metallfluoriden, Metallnitriden, Metallcarbiden als auch deren Mischungen und deren Kombinationen besteht, ausgewählt werden, umfasst oder daraus besteht.

Bevorzugt werden die erfindungsgemäßen eingefärbten Glasplättchen mit ein oder mehreren hoch- und/oder niedrigbrechenden Metalloxidschichten beschichtet. Gemäß einer bevorzugten Weiterbildung der Erfindung werden die eingefärbten Glasplättchen mit einer (Zahl: 1) oder zwei hochbrechenden Beschichtung, insbesondere Titanoxid und/oder Eisenoxid, versehen. Auf diese hochbrechende Beschichtung können dann optional eine oder mehrere Schutzschichten und/oder organisch-chemische Oberflächenmodifizierungen aufgebracht werden.

Die hochbrechenden Metalloxidschichten haben bevorzugt einen Brechungsindex ≥ 1, 8.

Die hochbrechenden Metalloxidschichten werden bevorzugt aus der Gruppe, die aus TiO₂, Fe₂O₃, Fe₃O₄, TiFe₂O₅, ZnO, SnO₂, CoO, Co₃O₄, ZrO₂, Cr₂O₃, VO₂, V₂O₃, (Sn,Sb)O₂, FeTiO₃, deren Mischungen und deren Kombinationen besteht, ausgewählt.

Des Weiteren können die erfindungsgemäßen eingefärbten Glaspartikel, vorzugsweise eingefärbten Glasplättchen, auch mit einer sogenannten Mehrfachbeschichtung beschichtet sein. Diese Beschichtung weist vorzugsweise folgenden Aufbau auf:
(A) eine Schicht mit einem Brechungsindex n > 1.8 und einer durchschnittlichen Dicke von 50-350 nm,
(B) a eine Schicht mit einem Brechungsindex n < 1.8 und einer durchschnittlichen Dicke von 50-500 nm,
(C) eine Schicht mit einem Brechungsindex n > 1.8 und einer durchschnittlichen Dicke von 20-350 nm,

Die Dicken der Schichten (A) (B) oder (C) können hierbei unabhängig voneinander gleich oder unterschiedlich sein. Selbstverständlich kann sich dieser Schichtaufbau auch wiederholen. Es können auch andere und zusätzliche Schichten aufgebracht sein, um beispielsweise Interferenzphänomene, Reflexionsvermögen, Verarbeitungseigenschaften zu verändern oder zu verbessern. Bevorzugterweise liegen die Schichtdicken (A) und (C) bevorzugt im Bereich von 20 - 350 nm, weiter bevorzugt bei 50 - 250 nm und noch weiter bevorzugt bei 70 - 150 nm.

Die niedrigbrechende Schicht (B) hat eine bevorzugte Dicke von 50 - 500 nm, weiter bevorzugt von 100 - 200 nm und noch weiter bevorzugt von 130 - 180 nm und umfasst vorzugsweise im wesentlichen oder besteht vorzugsweise aus B₂O₃, SiO₂ und/oder Al₂O₃. Gemäß einer bevorzugten Ausführungsform ist die niedrigbrechende Schicht Siliziumoxid, bevorzugt SiO₂.

Die Schichten (A) und (C) umfassen vorzugsweise im Wesentlichen oder bestehen bevorzugt aus TiO₂ und/oder Fe₂O₃. Das TiO₂ kann hierbei in der Rutil- oder Anatasmodifikation vorkommen, bevorzugterweise aber in der Rutilform. Wenn die Schicht aus Rutil-TiO₂ bestehen soll, wird vor der TiO₂-Abscheidung bevorzugt eine dünne Schicht aus SnO₂ oder Fe₂O₃ aufgebracht. Eine solche Schicht aus SnO₂ oder Fe₂O₃ bewirkt, dass das TiO₂ unmittelbar in der Rutil-Kristallstruktur abgeschieden wird. Die Dicke dieser Vorbeschichtung aus SnO₂ oder Fe₂O₃ ist bevorzugt < 10 nm und besonders bevorzugt < 5 nm.

Bevorzugte Beispiele für Multilayer-Beschichtungsfolgen auf Basis erfindungsgemäßer planer eingefärbter Glasplättchen sind folgende:
eingefärbtes Glasplättchen + TiO₂ + SiO₂ + TiO₂
eingefärbtes Glasplättchen + Fe₂O₃ + SiO₂ + TiO₂
eingefärbtes Glasplättchen + TiO₂ + SiO₂ + Fe₂O₃
eingefärbtes Glasplättchen + TiO₂ + SiO₂ + TiO₂/ Fe₂O₃
eingefärbtes Glasplättchen+ TiO₂/ Fe₂O₃ + SiO₂ + TiO₂/ Fe₂O₃
eingefärbtes Glasplättchen+ TiO₂/ Fe₂O₃ + SiO₂ + TiO₂
eingefärbtes Glasplättchen+ TiO₂/ Fe₂O₃ + SiO₂ + Fe₂O₃
eingefärbtes Glasplättchen+ Fe₂O₃ + SiO₂ + TiO₂/ Fe₂O₃
eingefärbtes Glasplättchen+ SiO₂+ TiO₂ + SiO₂ + TiO₂
eingefärbtes Glasplättchen+ SiO₂ + Fe₂O₃ + SiO₂ + TiO₂
eingefärbtes Glasplättchen+ SiO₂ + TiO₂ + SiO₂ + TiO₂/ Fe₂O₃
eingefärbtes Glasplättchen+ SiO₂ + TiO₂/ Fe₂O₃ + SiO₂ + TiO₂/ Fe₂O₃
eingefärbtes Glasplättchen+ SiO₂ + TiO₂/ Fe₂O₃ + SiO₂ + TiO₂
eingefärbtes Glasplättchen+ SiO₂ + TiO₂/ Fe₂O₃ + SiO₂ + Fe₂O₃
eingefärbtes Glasplättchen+ SiO₂ + Fe₂O₃ + SiO₂ + TiO₂/ Fe₂O₃

Die eingefärbten Glasplättchen gemäß der vorliegenden Erfindung können, mit oder ohne Nachbeschichtung, beispielsweise von niedrig- und hochbrechenden Metalloxiden und/oder organisch-chemischer Nachbeschichtung, als Effektpigmente bzw. Glaspigmente bezeichnet werden.

Weiterer Erfindungsgegenstand sind eingefärbte Glasplättchen, die auch als farbige Glaspigmente bezeichnet werden können, mit einem ein- oder beidseitig mit transparenten und/oder semitransparenten Metallschichten beschichteten eingefärbten Glasplättchen. Diese Metallschichten enthalten Metalle, die vorzugsweise aus der Gruppe, bestehend aus Silber, Aluminium, Chrom, Nickel, Gold, Platin, Palladium, Kupfer, Zink, deren Mischungen und Legierungen, ausgewählt sind.

Optional können die erfindungsgemäßen eingefärbten Glasplättchen oder Glaspigmente mit Schutzschichten versehen sein, um witterungs- und/oder UVbeständige eingefärbte Glasplättchen oder Glaspigmente zu erhalten.

Die Schutzschichten werden bevorzugt ausgewählt aus Oxiden, Hydroxiden und/oder Oxidhydraten der Elemente Silicium, Zirkonium, Cer und/oder Aluminium. Hierbei werden weiter bevorzugt mindestens zwei Schichten aus verschiedenen Oxiden aufgebracht, wobei alle möglichen Kombinationen an Schichten der vorstehend genannten Metalloxide möglich sind. Besonders bevorzugt wird zuerst eine Ceroxidschicht gefolgt von einer SiO₂-Schicht aufgebracht, da sich diese Schichtkombination als die wirksamste herausgestellt hat. Gemäß einer bevorzugten Weiterbildung der Erfindung ist die SiO₂-Schicht unmittelbar auf die Ceroxidschicht aufgebracht. Eine solche Schichtabfolge ist in der EP 1 682 622 B1 offenbart, deren Inhalt hiermit unter Bezugnahme aufgenommen ist.

Um insbesondere in Coatingsanwendungen eine Kompatibilität zum umgebenden Bindemittelmedium herzustellen, werden die erfindungsgemäßen eingefärbten

Glasplättchen mit oder ohne weiteren niedrig- und hochbrechenden Metalloxidschichten bei einer weiteren bevorzugten Ausführungsform abschließend mit einer organisch-chemisch Oberflächenmodifizierung aus ein oder mehreren organofunktionellen Silanen, Aluminaten, Zirkonaten und/oder Titanaten, wie in der DE 10 2006 009 130 A1 offenbart, oder aus wenigstens einer organischen Phosphorhaltigen Verbindung, wie in der DE 10 2005 037 612 A1 offenbart, versehen. Die Inhalte der DE 10 2006 009 130 A1 und der DE 10 2005 037 612 A1 sind hiermit unter Bezugnahme aufgenommen.

Bei einer weiteren vorteilhaften Ausführungsform weisen die erfindungsgemäßen eingefärbten Glassplättchen eine Farbpigmente enthaltende Beschichtung auf.

Einzelheiten der Herstellung und Zusammensetzung einer vorteilhaften Pigmentbeschichtung sind beispielsweise in der DE 10 2005 037 612 A1, der DE 10 2006 009 130 A1 und in der WO 2007/140897 A1 ausführlich beschrieben, deren Inhalte hiermit unter Bezugnahme aufgenommen sind.

Die erfindungsgemäßen eingefärbten Glassplättchen weisen eine bei handelsüblichen Glaspigmenten bisher nicht erreichte Farbigkeit und Farbenvielfalt auf.

Die erfindungsgemäßen eingefärbten Glasplättchen zeichnen sich - gegenüber einem oberflächengefärbten Glaspartikel - durch eine deutlich erhöhte Beständigkeit gegenüber mechanischer und chemischer Beanspruchung aus, ähnlich einem ungefärbten Glaspartikel.

Hervorzuheben ist die ausgezeichnete Lichtbeständigkeit der erfindungsgemäßen eingefärbten Glasplättchen. Diese vorteilhafte Lichtbeständigkeit wird durch den Einsatz von Farbmittel auf Basis von reinen metallischen Nanopartikein oder Metalloxiden erreicht. Diese metallischen Nanopartikel oder Metalloxide werden durch UV-Licht nicht angegriffen oder chemisch abgebaut, im Gegensatz zu organischen Farbmitteln.

Auch weisen die erfindungsgemäßen eingefärbten Glasplättchen eine Wärmestabilität bis zu einer Temperatur von etwa 400 °C auf.

Durch den Einsatz von Absorberfarbstoffen in Form von metallischen Nanopartikein oder Metalloxiden zeigen die erfindungsgemäßen eingefärbten Glasplättchen eine nicht winkelabhängige Farbigkeit, im Gegensatz zu herkömmlichen, beispielsweise in beschriebenen Interferenzpigmenten. Optional können die erfindungsgemäßen eingefärbten Glasplättchen mit einer zusätzlichen Interferenzeffekte hervorrufenden Beschichtung versehen sein.

Die erfindungsgemäßen eingefärbten Glasplättchen sowie die auf Basis von dünnen, eingefärbten Glasplättchen hergestellten Effektpigmente sind besonders vorteilhaft für Automobilanwendungen einsetzbar, insbesondere bei Verwendung in Autolacken, da hier die Schichtdicken der Basislackschichten sehr gering sind (12-15 µm) mit einem Trend zu noch geringeren Schichtdicken. Zudem weist ein auf Basis von eingefärbten Glasplättchen hergestelltes Effektpigment ein besseres Größen(Durchmesser)-Dicken-Verhältnis (engl.: aspect ratio) und dadurch eine verbesserte parallele Orientierung zum Untergrund auf. Das verbesserte Größen(Durchmesser)-Dicken-Verhältnis beruht darauf, das die erfindungsgemäßen eingefärbten Glasplättchen bzw. daraus hergestellte Effektpigmente im Verhältnis zur Größe/zum Durchmesser eine sehr geringe Dicke aufweisen. Das Größen/Durchmesser-Dicken-Verhältnis liegt vorzugsweise in einem Bereich von 2000 : 1 bis 10: 1, vorzugsweise von 1000 : 1 bis 20 : 1, weiter bevorzugt von 500 : 1 bis 25 : 1.

Das erfindungsgemäße Verfahren zur Herstellung von eingefärbten Glaspartikel umfasst folgende Schritte:
(a) Inkontaktbringen von Alkalioxid-haltigen Glaspartikeln mit einer färbenden Metallsalzschmelze, wobei die färbende Metallsalzschmelze wenigstens ein färbendes Metallsalz und wenigstens ein den Schmelzpunkt des färbenden Metallsalzes absenkendes Mittel enthält und die Temperatur der färbenden Metallsalzschmelze unterhalb der Schmelztemperatur der Glaspartikel liegt, für einen ausreichenden Zeitraum unter Erhalt von eingefärbten Glaspartikein,
(b) Abtrennen der in Schritt (a) erhaltenen eingefärbten Glaspartikel von der färbenden Metallsalzschmelze"
(c) optional Waschen der in Schritt (b) abgetrennten eingefärbten Glaspartikel,
(d) optional Trocknen der in Schritt (c) gewaschenen eingefärbten Glaspartikel,
(e) optional Erwärmen der in Schritt (b), (c) oder (d) erhaltenen eingefärbten Glaspartikel und
(f) optional Abkühlen und Waschen der in Schritt (e) erwärmten eingefärbten Glaspartikel.

Das erfindungsgemäße Verfahren ist erstaunlich einfach und führt zu zuverlässig intensiv eingefärbten Glaspartikeln.

Das erfindungsgemäße Verfahren zeichnet sich unter anderem dadurch aus, dass wenigstens ein den Schmelzpunkt des färbenden Metallsalzes absenkendes Mittel dem färbenden Metallsalz zugesetzt wird. Hierdurch wird eine eutektische Mischung, vorzugsweise ein Eutektikum, bereitgestellt, die bei einer geringeren Temperatur als Schmelze vorliegt, verglichen mit dem Schmelzpunkt des reinen färbenden Metallsalzes. Insbesondere liegt die Temperatur der eutektischen Mischung unter der Zersetzungstemperatur der Metallsalze.

Durch Verwendung einer eutektischen Mischung, vorzugsweise eines Eutektikums, wird zum einen der Energiebedarf abgesenkt. Des weiteren werden die Glaspartikel, insbesondere die Glasplättchen, bei einer geringeren Temperatur eingefärbt, weshalb keine wesentliche, vorzugsweise keine Verformung der Glaspartikel, insbesondere der Glasplättchen, erfolgt. Mithin behalten insbesondere Glasplättchen ihre Planarität. Unter Verwendung der so hergestellten planen eingefärbten Glasplättchen können durch nachfolgende Beschichtung mit optisch aktiven Materialien, beispielsweise hochbrechenden Metalloxiden wie Titanoxid und/oder Eisenoxid, Perlglanzpigmente mit überragenden optischen Eigenschaften hergestellt werden. Da die erfindungsgemäß eingefärbten Glasplättchen keine wesentlichen, vorzugsweise keine, Verformungen aufweisen, wie bereits oben erläutert, kommt es nicht zu wesentlichen unerwünschten Streuungen oder Lichtreflexionen oder Interferenzen. Die Gesamtheit der so hergestellten Effektpigmente weisen mithin eine einheitliche und reproduzierbare Qualität auf.

Überraschenderweise ist die Behandlungsdauer zur Einfärbung äußerst kurz, wobei es für dieses Phänomen bislang keine Erklärung gibt. Der Zeitraum zur Einfärbung der Glaspartikel, vorzugsweise Glasplättchen, beträgt in der Regel weniger als 90 Minuten, vorzugsweise weniger als 60 Minuten, weiter vorzugsweise weniger als 30 Minuten. Ein Zeitraum von 2 bis 20 Minuten, bevorzugt von 5 bis 15 Minuten, hat sich überraschenderweise als ausreichend erwiesen, um eine tiefe Einfärbung der Glaspartikel, vorzugsweise der Glasplättchen, zu bewirken. Es hat sich überraschenderweise gezeigt, dass die Natriumionen innerhalb weniger Minuten aus den eingesetzten Glaspartikeln, insbesondere Glasplättchen, entfernt sind und das Farbmittel in die Glaspartikel eingedrungen sind.

Bei den Glaspartikein kann es sich um Glasplättchen oder um sphärische oder irregulär geformte Glaspartikel handeln.

Die sphärischen oder irregulär geformten Glaspartikel liegen vorzugsweise in einem Größenbereich von 1 bis 3000 µm, weiter bevorzugt von 1,5 - 1000 µm, noch weiter bevorzugt von 5 - 500 µm, und besonders bevorzugt von 10 - 300 µm, weiter bevorzugt von 50 µm bis 250 µm vor.

Bei einer bevorzugten Ausführungsform sind die eingefärbten Glaspartikel eingefärbte Glaskugeln mit einer mittleren Größe von 1 bis 3000 µm, weiter bevorzugt von 1,5 - 1000 µm, noch weiter bevorzugt von 5 - 500 µm, und besonders bevorzugt von 10 - 300 µm, weiter bevorzugt von 50 µm bis 250 µm. Derartige eingefärbte Glaskugeln stellen kleine "Glasperlen" dar, die ggf. auch mit einem Loch versehen werden können, um zu einer Kette, beispielsweise auf einem Faden oder Draht, aufgereiht werden zu können. Diese eingefärbten Glasperlen können auch als Kennzeichnungs- oder Markierungsmittel verwendet werden, beispielsweise in Beschichtungsstoffen, wie Farben, Lacken, Fahrbahnmarkierungen, etc. oder auf Leitplanken, Straßenpfosten, Verkehrsschildern, etc..

Derart intensiv eingefärbte Glasperlen waren bisher nicht zugänglich und können auch als Modeschmuck, Dekoration und Ersatzperlen für Naturperlen aus Muscheln verwendet werden.

Gemäß einer bevorzugten Ausführungsform weisen die eingefärbten Glaskugeln bzw. Glasperlen einen Kugel- bzw. Perlendurchmesser von bis zu 3000 µm auf. Oberhalb einer Größe von 3000 µm kann es sein, dass die Färbung etwas weniger intensiv ist, wenn die färbenden Metallionen nicht so tief in das Glaspartikel, beispielsweise eine Glaskugel, eindringen. Bei einer Größe von 3000 µm und kleiner ist eine intensive Einfärbung bzw. Durchfärbung der Glaspartikel ohne weiteres möglich.

Da das erfindungsgemäße Verfahren zur Einfärbung von sphärischen, irregulär geformten und/oder plättchenförmigen Glaspartikeln verwendet werden kann, wird im Folgenden allgemein von Glaspartikeln gesprochen. Vorzugsweise handelt es sich bei den Glaspartikeln insbesondere um Glasplättchen, wobei bezüglich der näheren Spezifizierung der Glaspartikel, wie beispielsweise der Verteilung der Durchmesser der Glasplättchen etc., auf die obigen Ausführungen zu den eingefärbten Glasplättchen verwiesen wird, die entsprechend in bezug auf die Ausführungen zu dem erfindungsgemäßen Verfahren gelten.

Das Inkontaktbringen von Alkalioxid-haltigen Glaspartikein, insbesondere von Natriumionen-haltigen Glaspartikeln, mit einer färbenden Metallsalzschmelze kann durch Suspendieren der Alkalioxid-haltigen Glaspartikel in einer färbenden Metallsalzschmelze erfolgen. Alternativ können die Alkalioxid-haltigen, insbesondere Natriumionen-haltigen Glaspartikel, Glaspartikel auch zunächst mit einem färbenden Metallsalz vermengt werden und das so erhaltene Gemenge erwärmt werden, bis das Metallsalz schmilzt.

Die Alkalioxid-haltigen Glaspartikel, vorzugsweise Natriumionen-haltigen, werden für einen ausreichenden Zeitraum mit der Metallschmelze in Kontakt gehalten. Der Zeitraum kann dabei in Abhängigkeit von der Größe der Alkalioxid-haltigen Glaspärtikeln, der Glasart, der eingestellten Temperatur der Metallsalzschmelze und der gewünschten Intensität der Einfärbung variiert werden. Die Temperatur der Glasschmelze liegt jedenfalls unter der Schmelztemperatur der einzufärbenden Glaspartikel. Vorteilhaft wird die Metallsalzmischung während des Einfärbens der Glaspartikel gerührt.

Das Abtrennen der eingefärbten Glaspartikel von der Metallsalzschmelze kann beispielsweise durch Filtrieren der Metallsalzschmelze erfolgen. Es ist aber auch möglich, die erkaltete Metallsalzschmelze in einem Lösungsmittel, beispielsweise Wasser, zu lösen und die eingefärbten Glaspartikel sodann von der Salzlösung abzutrennen.

Die erhaltenen eingefärbten Glaspartikel können wahlweise in einem Lösungsmittel, vorzugsweise Wasser, gewaschen und nachfolgend optional getrocknet werden. Im Anschluß an die Trocknung oder direkt nach dem Waschen oder direkt nach dem Kontaktieren mit der färbenden Metallsalzschmelze können die so behandelten Glaspartikel erwärmt werden. Das Erwärmen der eingefärbten oder mit der Metallsalzschmelze behandelten Glaspartikel kann zu einer Intensivierung der Farbe der gefärbten Glaspartikel führen. Nach dem Erwärmen werden die in der Regel intensiv eingefärbten Glaspartikel abgekühlt und können optional durch Inkontaktbringen mit einem Lösungsmittel, vorzugsweise Wasser, gereinigt werden.

Bei dem erfindungsgemäßen Verfahren wird das ungefärbte Glaspartikel bevorzugt mit einer wenigstens zwei Metallsalze enthaltenden Schmelze in Kontakt gebracht. Diese umfassen vorzugsweise wenigstens ein färbendes und wenigstens ein nichtfärbendes Metallsalz. Das wenigstens eine nichtfärbende Metallsalz dient dabei als Mittel zur Absenkung der Schmelztemperatur des färbenden Metallsalzes, mithin zur Bereitstellung der eutektischen Mischung, vorzugsweise Eutektikums.

Unter einem "färbenden Metallsalz" wird erfindungsgemäß ein Metallsalz verstanden, welches Kationen enthält, die in der Lage sind, in das Glasplättchen einzudringen und dort ein metallisches farbiges Nanopartikel und/oder farbiges Metalloxid zu bilden.

Bevorzugt enthalten die färbenden Metallsalze Ionen, bevorzugt Kationen, die aus der Gruppe, die aus Gold, Silber, Kupfer, Eisen, Cobalt, Chrom, Selen, Nickel, Mangan, Uran, Legierungen und Mischungen derselben besteht, ausgewählt werden. Als Anionen enthalten die färbenden Metallsalze bevorzugt Halogenide, Sulfate, Nitrate und/oder Oxide.

Bei diesen Salzen kann das Metall jeweils in allen bekannten Oxidationszahlen vorliegen. So kann beispielsweise Kupfer in den Formen Kupfer(I) und Kupfer(II) als CuCl oder CuCl₂ vorliegen. Goldionen können beispielsweise in den Oxidationsstufen (I) oder (III), Eisenionen in den Oxidationsstufen (II) oder (III) und Chromionen in den Oxidationsstufen (III) oder (VI) vorliegen.

Beispiele bevorzugten färbenden Metallsalze sind: AgNO₃, CuCl₂, CuBr₂, CuI₂, AgCl, AgBr, Agl, CuSO₄, CoSO₄, Ag₂SO₄, CoCl₂, HAuCl₄, KAuCl₄ oder deren Mischungen besteht.

Bei Verwendung dieser färbenden Metallsalze werden, insbesondere unter reduzierenden Bedingungen, bevorzugt metallische Nanopartikel im Glaspartikel enthalten.

Weiter bevorzugt werden als färbende Metallsalze Na₂Cr₂O₇, FeCl₃, FeSO₄ oder deren Mischungen verwendet. Aus diesen Salzen entstehen bevorzugt Metalloxide wie Fe₂O₃ oder Cr₂O₃.

Unter einem "nicht färbenden Metallsalz" wird ein Metallsalz verstanden, welches keine Färbung der Glaspartikel im erfindungsgemäßen Verfahren hervorruft.

Der Zusatz eines nichtfärbenden Metallsalzes zur Metallsalzschmelze bringt große Vorteile mit sich.

So kann, wie bereits vorstehend erläutert, beispielsweise mittels der nicht färbenden Metallsalzkomponente der Schmelzpunkt der Salzmischung durch Eutektikumbildung herabgesetzt und/oder die Einsatzmenge von Metallsalz verringert werden. Ebenfalls kann das nichtfärbende Metallsalz als Reduktions- oder Oxidationsmittel oder als Hilfsmaterial zur Verbesserung des Phasenüberganges bzw. als Stabilisator für die in der Glasschmelze enthaltenden färbenden Metallsalzkomponente Verwendung finden.

Bei einer besonders bevorzugten Ausführungsform der Erfindung erfolgt die Glasfärbung mit einer Salzmischung, die einen niedrigeren Schmelzpunkt aufweist als deren Einzelkomponenten. Weiter bevorzugt handelt es sich hierbei um eine eutektische Mischung oder eine annähernd eutektische Mischung aus Metallsalzen.

Das nicht färbende Metallsalz enthält Kationen, die bevorzugt aus der Gruppe, die aus Natrium, Kalium, Lithium, Calcium, Magnesium, Titan und deren Mischungen besteht, ausgewählt werden.

Als Anionen enthält das nicht färbende Metallsalz bevorzugt Sulfate, Sulfide, Nitrate, Nitrite, Halogenide und/oder Oxide.

Weiter bevorzugt wird in Schritt a) eine Metallsalzschmelze enthaltend wenigstens ein nicht färbendes Metallsalz wie Natriumnitrat (Na₂NO₃), Natriumsulfat (Na₂SO₄), Natriumchlorid (NaCl), Lithiumchlorid (LiCl) und/oder Kaliumchlorid (KCI) eingesetzt.

Die einzufärbenden Glaspartikel werden bevorzugt aus der Gruppe, die aus Glassplättchen, Glaskugeln, Glasscherben, irregulär geformten Glaspartikeln und deren Mischungen besteht, ausgewählt.

Das Verhältnis von färbendem Metallsalz zu nichtfärbendem Metallsalz kann entsprechend dem Einfärbungsgrad bzw. der Einfärbungsdauer und der Temperatur variiert werden. Dabei kann das Mengenverhältnis (Gew./Gew.) von nichtfärbendem Metallsalz zu färbendem Metallsalz einen breiten Bereich von 100 : 1 bis 1 : 100, weiter bevorzugt von 50 : 1 bis 1 : 50, jeweils bezogen auf das Gewicht erwiesen. Als sehr geeignet hat sich ein Mengenverhältnis (Gew./Gew.) von nichtfärbendem Metallsalz zu färbendem Metallsalz von 10 : 1 bis 1 : 10 erwiesen.

Die mittels des erfindungsgemäßen Verfahrens einzufärbenden und eingefärbten Glasplättchen weisen einen Durchmesser von 1 bis 500 µm, vorzugsweise von 1,5 bis 450 µm, bevorzugt von 2 bis 400 µm und besonders bevorzugt von 2,5 bis 350 µm auf. Die mittlere Dicke der Glasplättchen liegt vorzugsweise in einem Bereich von 30 bis 3.000 nm, bevorzugt 50 bis 1500 nm, besonders bevorzugt 70 bis 500 nm und ganz besonders bevorzugt von 80 bis unter 350 nm, auf. Als sehr geeignet haben sich auch einzufärbende und eingefärbte Glasplättchen mit einer mittleren Dicke von 100 bis 300 nm oder von 120 bis 250 nm erwiesen.

Das Schmelzen der Metallsalzmischung kann grundsätzlich in jeder geeigneten Schmelzvorrichtung durchgeführt werden.

Vorzugsweise wird die Metallsalzmischung in einem geeigneten Behältnis durch mechanischen Energieeintrag zunächst homogenisiert und anschließend in einem temperaturbeständigen Behältnis, beispielsweise einem Keramiktiegel oder einer Wanne unter Wärmezufuhr erhitzt. Der Energieeintrag erfolgt, indem das Behältnis entweder in einen geheizten Raum, z.B. einen Ofen, eingebracht wird, oder die Wände des Behältnisses direkt beheizt werden. Auch eine Energiezufuhr mittels Strahlung, z.B. Infrarotstrahlung oder Mikrowellenstrahlung, ist möglich.

Bei einer weiteren, bevorzugten Ausführungsform des erfindungsgemäßen Verfahrens wird Schritt a) unter Schutzgas, beispielsweise enthaltend Stickstoff und/oder Argon, oder unter reaktiven Gaszusammensetzungen, beispielsweise Argon/Sauerstoff oder Stickstoff/Wasserstoff Mischungen, durchgeführt. Der Anteil des reaktiven Gases in diesen Mischungen kann 0 bis 99 Vol.-%, bevorzugt 0,5 bis 50 Vol.-%, ganz besonders bevorzugt 0,8 bis 30 Vol.-%, sein.

Das Kontaktieren in Schritt (a) von einzufärbenden Glaspartikeln, vorzugsweise Glasplättchen, und Metallsalzschmelze erfolgt vorzugsweise bei einer Temperatur in einem Bereich von 100 °C bis 1000 °C, bevorzugt von 170°C bis 700 °C und besonders bevorzugt von 250 °C bis 650 °C, noch weiter bevorzugt von 310 bis 610°C.

Die Dauer des Inkontaktbringens von einzufärbenden Glaspartikeln und Metallsalzschmelze und damit der stattfindenden Einlagerungsreaktion beträgt vorzugsweise wenige Minuten, kann aber auch mehrere Stunden, beispielsweise 12 Stunden, betragen. Eine Verfahrensdauer von mehreren Stunden ist jedoch im Hinblick auf den Energieverbrauch und die Gefahr einer Deformation der Glaspartikel erfindungsgemäß weniger bevorzugt. Bei einer Verfahrensdauer von mehreren Stunden wäre mithin die Temperatur so niedrig einzustellen, dass es zu keiner Deformation der Glaspartikel, insbesondere der Glasplättchen, kommt. Bei dieser Vorgehensweise ist jedoch die Verfahrensdauer unerwünscht verlängert. Bevorzugt beträgt die Dauer erfindungsgemäß nur 2 bis 90 Minuten, weiter bevorzugt 5 bis 30 Minuten, da zum einen der Energieverbrauch signifikant erniedrigt ist und zum anderen die Glaspartikel, insbesondere die Glasplättchen, nicht verformt sind.

Bei dieser Einfärbung diffundieren Metallionen aus der Metallsalzmischung in die einzufärbenden Glaspartikel, vorzugsweise Glasplättchen, und aus den Glaspartikeln, vorzugsweise Glasplättchen, Alkaliionen, insbesondere Natriumionen, in die Metallsalzmischung, wie obenstehend erläutert.

Die Metallionen werden anschließend im Glas reduziert und bilden nanopartikuläre Metallpartikel. Kumulativ oder alternativ werden die Metallionen oxidiert unter Ausbildung von Metalloxid.

In Abhängigkeit von den gewählten äußeren Bedingungen, insbesondere der gewählten Gasatmosphäre, können vorwiegend, vorzugsweise ausschließlich, metallische Nanopartikel oder ausschließlich Metalloxide erhalten werden. Unter einer oxidativen Gasatmosphäre werden vorwiegend, bevorzugt ausschließlich, Metalloxide in den einzufärbenden Glaspartikeln erzeugt. Unter einer reduktiven Gasatmosphäre, werden vorwiegend, bevorzugt ausschließlich, metallische Nanopartikel in den einzufärbenden Glaspartikeln erzeugt.

Die anschließend in Schritt (b) durchgeführte Abtrennung der mit farbgebenden Metallteilchen dotierten Glaspartikel, vorzugsweise Glasplättchen, aus der Metallsalzmischung kann beispielsweise durch Filtration durch poröse Materialien, wie beispielsweise Filter aus temperaturbeständigem Stahl oder Glas oder aus temperaturbeständiger Keramik, sogenannte keramische Schaumfilter wie sie zum Beispiel von der Firma CERANEX kommerziell erhältlich sind, erfolgen.

Vorteilhaft ist auch eine Abtrennung der eingefärbten Glaspartikel, vorzugsweise Glasplättchen, aus der Metallsalzschmelze, indem die die Glasplättchen enthaltende Metallsalzschmelze in einer Flüssigkeit gelöst wird und anschließend die Glasplättchen durch Filtration von der Flüssigkeit abgetrennt werden.

Das Einbringen der eingefärbten Glaspartikel, vorzugsweise eingefärbten Glasplättchen, und der Metallsalze enthaltenden Schmelze in die Flüssigkeit kann vor oder nach Abkühlung der Schmelze erfolgen.

Es ist auch vorgesehen, die mittels porösen Materialien abgetrennten eingefärbten Glaspartikel zusätzlich in ein Lösungsmittel einzubringen. Zur Erleichterung des Einbringens der eingefärbten Glaspartikel kann das Lösungsmittel zusätzlich gerührt und/oder erwärmt werden.

Als Lösungsmittel finden vorteilhaft Wasser, besonders vorteilhaft vollentsalztes Wasser, wässrige Lösungen von Säuren, wie beispielsweise Salpetersäure, Schwefelsäure, Salzsäure oder Basen, wie beispielsweise Natronlauge, Kalilauge, Ammoniak oder Alkohole, wie beispielsweise Methanol, Ethanol und Isopropanol, Aceton und Ethylacetat und deren Mischungen, Verwendung.

Auf der eingefärbten Glaspartikeloberfläche vorhandene Salzreste werden vorteilhaft mit dem Fachmann bekannten Lösungsmittelentfernt (Schritt (d)). Bevorzugt kommen als Lösungsmittel die bereits im optionalen Schritt (c) eingesetzten Flüssigkeiten zur Anwendung.

Bei Bedarf werden die oberflächengereinigten eingefärbten Glaspartikel, vorzugsweise eingefärbten Glasplättchen, bei einer Temperatur von 50°C bis 500°C bei Normaldruck oder unter reduziertem Druck von 50 mbar bis 800 mbar getrocknet.

Die Farbigkeit (Farbintensität) der so bereitgestellten eingefärbten Glaspartikel, insbesondere der eingefärbten Glasplättchen, kann durch eine weitere Wärmebehandlung verbessert werden. Dazu werden die eingefärbten Glaspartikel, vorzugsweise Glasplättchen, in einem weiteren optionalen Schritt (e) mit einer an die Erweichungstemperatur der jeweiligen Glasart angepassten Temperatur, bevorzugt bei einer Temperatur von 100°C bis 1000 °C, besonders bevorzugt bei einer Temperatur von 120°C bis 700 °C, wärmebehandelt. Diese auf die jeweiligen eingefärbten Glaspartikel, vorzugsweise eingefärbten Glasplättchen, abgestimmte Wärmebehandlung erfolgt in einem Zeitrahmen von einige Minuten bis zu zwei Tagen, bevorzugt von 10 Minuten bis 24 Stunden, besonders bevorzugt von 20 Minuten bis 1,5 Stunden, vorzugsweise in einem Druckbereich von 100 mbar bis 10 bar.

Optional kann, wie bereits vorstehend erläutert, die Wärmebehandlung der Pigmente unter inerten Bedingungen, beispielsweise in einer Stickstoff (N₂) und/oder Argon (Ar) enthaltenden Inertgas-Atmosphäre, erfolgen. Bevorzugt finden zur Wärmebehandlung von eingefärbten Glaspartikeln, vorzugsweise eingefärbten Glassplättchen, reduzierende Gasgemische, wie beispielsweise aus Stickstoff und Wasserstoff (Formiergas), Verwendung. Das sogenannte Formiergas enthält Wasserstoff in einer Konzentration von 0,1 Vol.-% bis 100 Vol.-%, bevorzugt 3 Vol.-% bis 30 Vol.-%, beispielsweise in Stickstoff oder Argon. Bei Wärmebehandlung der eingefärbten Glaspartikel, vorzugsweise Glasplättchen, unter einer reduzierenden Gasatmosphäre entstehen bevorzugt metallische Nanopartikel, die zu einer intensiven Einfärbung der Glaspartikel, vorzugsweise der Glasplättchen führen.

Es ist auch möglich, die optionale Wärmebehandlung der Glaspigmente unter oxidierenden Bedingungen durchzuführen. Beispielsweise erfolgt dies mit Sauerstoff oder mit einem sauerstoffhaltigen Gasgemisch, enthaltend 0,1 Vol.-% bis annähernd 100 Vol.-%, bevorzugt 0,5 Vol.-% bis 30 Vol.-% Sauerstoff, beispielsweise in Stickstoff oder Argon. In diesem Fall werden bevorzugt Metalloxide in dem eingefärbten Glaspartikel, vorzugsweise Glasplättchen, gebildet.

Das erfindungsgemäße eingefärbte Glaspartikel, bevorzugt eingefärbte plane Glasplättchen, ist für alle dem Fachmann bekannten Anwendungen, bei denen gefärbte Partikel, Pigmente, Farbstoffe, Farbmittel, etc. verwendet werden, geeignet.

Vorzugsweise werden die eingefärbten Glaspartikel, bevorzugt eingefärbte plane Glasplättchen, beispielsweise in Form von Effektpigmenten, zur Färbung von Kunststoffen, Coatings, Pulverbeschichturigen, Farben, Druckfarben, Lacke, keramische und kosmetische Artikel, landwirtschaftliche Folien, oder Nahrungsmittelverpackungen verwendet.

Die eingefärbten Glaspartikel, insbesondere eingefärbten plane Glasplättchen, beispielsweise in Form von Effektpigmenten, können auch als Schmuck, Dekorationsartikel, Einrichtungsgegenstände oder zur Verzierung von Schmuck, Kunstgegenständen, Dekorationsartikeln, Einrichtungsgegenständen, Schuhen oder Bekleidung verwendet werden. Auch können die eingefärbten Glaspartikel als Markierungshilfsmittel bei Straßenmarkierungen, Leitplanken, Straßenpfosten, Verkehrsschildern etc. verwendet werden.

Die erfindungsgemäß eingefärbten Glaspartikel können insbesondere als Strass oder Pailletten bei der Herstellung von Schmuck oder Modeschmuck und zur Verzierung von Schuhen und Bekleidung vorteilhaft verwendet werden.

Gemäß einer äußerst bevorzugt Ausführungsform werden die eingefärbten Glaspartikel, insbesondere die eingefärbten Glasplättchen, zur Herstellung von Effektpigmenten verwendet. Bei Beschichtung der eingefärbten Glasplättchen mit Metalloxiden, vorzugsweise mit niedrig- und hochbrechenden Metalloxiden, werden intensiv farbige Effektpigmente bereitgestellt.

Bei Beschichtung von eingefärbten sphärischen Glaspartikeln, vorzugsweise von eingefärbten Glaskugeln, mit Metalloxiden, vorzugsweise mit niedrig- und hochbrechenden Metalloxiden, können intensiv farbig schillernde Glasperlen bereitgestellt werden. Diese Glasperlen können ebenfalls bei der Herstellung von Schmuck oder Modeschmuck und zur Verzierung von Schuhen und Bekleidung vorteilhaft verwendet werden.

Die folgenden Beispiele erläutern die Erfindung, ohne sie einzuschränken.

Allgemeine Grundlagen der experimentellen Beispiele:
Es wurden Chemikalien von VWR International GmbH (Darmstadt, Deutschland) verwendet. Alle Chemikalien waren mindestens von der Qualität p.a. (pro analysi) und wurden ohne weitere Reinigung verwendet. Als Wasser wurde vollentsalztes wasser verwendet. Als Ofen wurde ein Muffelofen von Nabertherm GmbH (Lilienthal, Deutschland) verwendet. Formiergas (5 % Wasserstoff, 95 % Argon) wurde von Linde AG (München, Deutschland) bezogen. Bei den verwendeten Glasplättchen handelte es sich um Glasplättchen GF100M mit einer Teilchengrößenverteilung mit einem D₁₀ = 50 µm, D₅₀ = 95,8 µm und einem D₉₀ = 169,2 µm von der Firma Glassflake Ltd., Leeds (Großbritannien). Alle Prozentangaben ohne weiteren Zusatz stellen Massenprozente dar. Für die Rasterelektronenmikroskopischen Untersuchungen (REM) sowie die REM-EDX-Analysen (Energie Dispersive Röntgenspektroskopie-Analyse) wurde ein Leo Supra 35 Gerät der Firma Zeiss verwendet.

### Abbildungen

Abb. 1 zeigt einen Querschliff eines erfindungsgemäßen mit Silbernitrat eingefärbten Glassplättchens (erfindungsgemäßes Beispiel 1).

Abb. 2 zeigt den Verlauf der Silberkonzentration über den in Abb. 1gezeigten Querschliff (erfindungsgemäßes Beispiel 1).

Abb. 3 zeigt den Verlauf der Silberkonzentration über den in Abb. 1 gezeigten Querschliff nach einer Wärmebehandlung des eingefärbten Glasplättchens (erfindungsgemäßes Beispiel 1).

Abb. 4 zeigt eine TEM-Aufnahme des erfindungsgemäßen mit Silbernitrat eingefärbten und wärmebehandelten Glasplättchens (erfindungsgemäßes Beispiel 1).

Abb. 5 zeigt eine REM-Aufnahme eines zu Vergleichszwecken oberflächlich gefärbten Glasplättchens (Vergleichsbeispiel 1).

Abb. 6 zeigt den Verlauf der Kupferkonzentration eines erfindungsgemäßen mit Kupfersulfat behandelten Glasplättchens (erfindungsgemäßes Beispiel 2, Variante 2).

Abb. 7 zeigt eine TEM-Aufnahme des erfindungsgemäßen mit Kupfersulfat eingefärbten und wärmebehandelten Glasplättchens (erfindungsgemäßes Beispiel 2, Variante 2).

Abb. 8 zeigt den Verlauf der Kupferkonzentration eines erfindungsgemäßen mit Kupfersulfat behandelten Glasplättchens (erfindungsgemäßes Beispiel 2, Variante 2).

Abb. 9 zeigt eine TEM-Aufnahme des erfindungsgemäßen mit Kupfersulfat eingefärbten und wärmebehandelten Glasplättchens (erfindungsgemäßes Beispiel 2, Variante 2).

Abb. 10a zeigt eine REM-Aufnahme von eingefärbten Glasplättchen (Variante 1) gemäß Vergleichsbeispiel 2 (Beispiel 3 der WO 2008/125857).

Abb. 10b zeigt eine REM-Aufnahme von erfindungemäßen eingefärbten Glasplättchen gemäß erfindungsgemäßem Beispiel 2 (Variante 1).

Abb. 11a zeigt eine REM-Aufnahme von eingefärbten Glasplättchen gemäß Vergleichsbeispiel 2 (Beispiel 3 der WO 2008/125857) nach Behandlung mit Formiergas (5 % Wasserstoff in Stickstoff) (Variante 2).

Abb. 11b zeigt eine REM-Aufnahme von erfindungemäßen eingefärbten Glasplättchen gemäß erfindungsgemäßem Beispiel 2 (Variante 2).

Abb. 12a zeigt eine REM-Aufnahme von eingefärbten Glasplättchen gemäß Vergleichsbeispiel 3 (Beispiel 5 der WO 2008/125857).

Abb. 12b zeigt eine REM-Aufnahme von erfindungemäßen eingefärbten Glasplättchen gemäß erfindungsgemäßem Beispiel 1.

### Erfindungsgemäßes Beispiel 1:

### Schritt 1: Einfärbung von Glasplättchen zur Herstellung von gelben Glaspigmenten

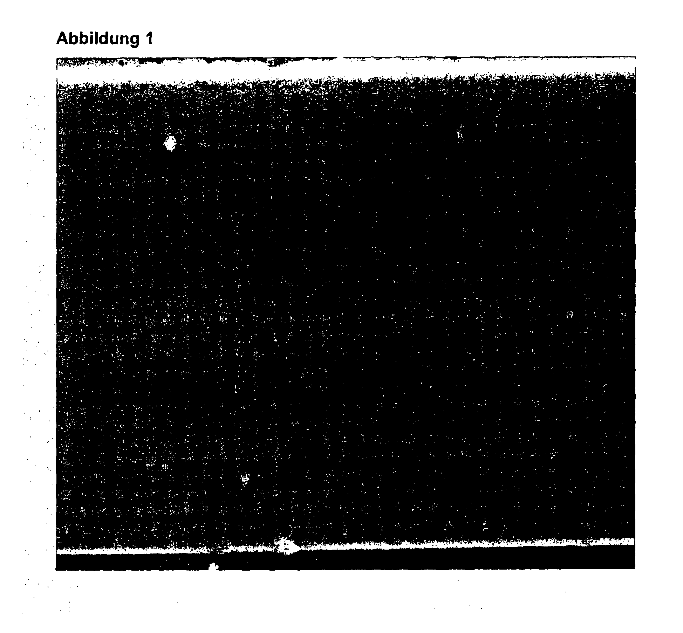

Zur Herstellung von gelben Glaspigmenten wurden zunächst 100 g einer Mischung aus 10 % Silbernitrat (AgNO₃) und 90 % Natriumnitrat (NaNO₃) mit einem Mörser fein verrieben. Die in einem Schmelztiegel eingebrachte Metallsalzmischung wurde in einem Muffelofen 120 min bei 350 °C geschmolzen. In die niedrigviskose Schmelze wurden 5 g farblose Glasplättchen GF100M mittels Rühren eingearbeitet und in dem Muffelofen für 30 Minuten bei 350 °C belassen. Anschließend wurde die Schmelze in einen 10 Liter vollentsalztes Wasser enthaltenden Behälter eingebracht. Das im Wasser aus der erstarrten Schmelze gebildete Salz wurde durch Rühren im Wasser vollständig gelöst. Die aus der wässrigen Suspension filtrierten Glasplättchen wurden bei 50 °C über Nacht getrocknet. Die schwach gelb gefärbten Glasplättchen wurden einer Rasterelektronenmikroskopie-Analyse unterzogen. Es wurden keine Silberpartikel größer 20 nm im Pigment gefunden. Jedoch wurden auf der Glasplättchenoberfläche einige, annähernd sphärische Silberausscheidungen gefunden. Aus diesen Glasplättchen hergestellte Querschliffe wurden mit einem Rasterelektronenmikroskop untersucht. Die untersuchten Querschliffe enthielten ebenfalls keine Partikel größer 20 nm (**Abb.1**).

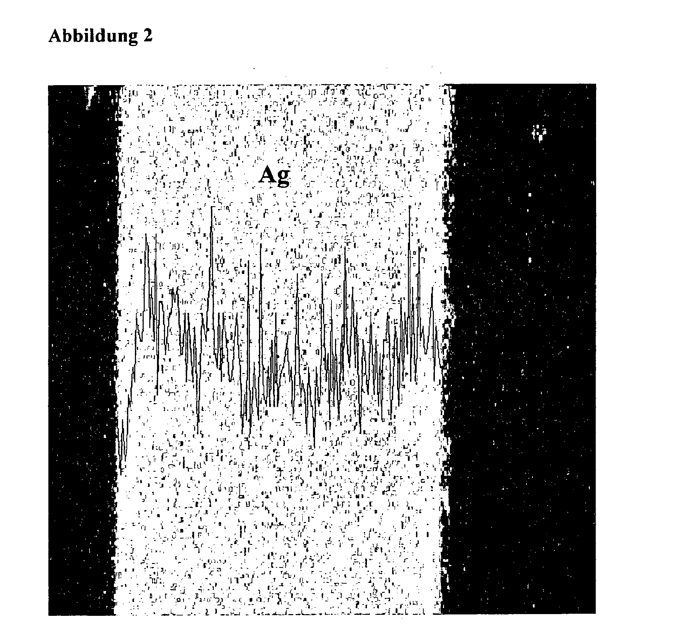

Anschließend wurde mittels REM-EDX-Analyse die Silberkonzentration in diesen Pigmenten untersucht. Dazu wurde der Verlauf der Silberkonzentration entlang der Dickenachse des Pigmentes analysiert (**Abb. 2**).

Die Versuchsergebnisse zeigen, dass die Silberkonzentration entlang der gesamten Dickenachse annährend konstant ist. Damit weist die Silberkonzentration ein Konzentrationsprofil auf, welches sich - überraschenderweise - wesentlich von einem einen üblichen Diffusionsprozess charakterisierenden Konzentrationsprofil unterscheidet, bei dem die Konzentration des eindiffundierenden Farbmittels über die Abstand zu den Grenzflächen (Glasplättchenoberflächen) abnimmt.

Weiterhin wurde festgestellt, dass in diesen gefärbten Glasplättchen bzw.

Glaspigmenten nahezu kein Natrium mehr enthalten ist. Die zur Glaspigmentherstellung als Ausgangsmaterial eingesetzten ungefärbten Glasplättchen enthielten Natrium in einer Konzentration von 7,98 Atomprozent. Dies bedeutet, dass während des Schmelzvorganges ein Austausch von aus dem Glas diffundierten Natriumionen gegen aus der Metallsalzschmelze in das Glas diffundierte Silberionen erfolgte.

Die Versuchsergebnisse sind nachfolgender **Tab. 2** zu entnehmen:

**Tabelle 2: Vergleich von Elementgehalten**

| **Glasplättchen Ausgangsmaterial (GF100M)** | | | **Eingefärbte Glasplättchen nach Schmelzbad** | | |
|---|---|---|---|---|---|
| Elem | Masse [%] | Atomar [%] | Elem | Masse [%] | Atomar [%] |
| O | 45,015 | 59,44 | O | 29,68 | 54,665 |
| Na | 8,68 | 7,98 | Na | 0,21 | 0,265 |
| Mg | 1,615 | 1,405 | Mg | 1,31 | 1,595 |
| Al | 2,98 | 2,335 | Al | 2,295 | 2,51 |
| Si | 32,96 | 24,795 | Si | 25,485 | 26,8 |
| Ag | 0,155 | 0,03 | Ag | 32,92 | 9,02 |
| K | 1,66 | 0,895 | K | 1,36 | 1,03 |
| Ca | 4,15 | 2,185 | Ca | 3,54 | 2,605 |
| Ti | 0,23 | 0,1 | Ti | 0,255 | 0,16 |
| Fe | 0,14 | 0,055 | Fe | 0,185 | 0,1 |
| Cu | 0,25 | 0,08 | Cu | 0,43 | 0,2 |
| Zn | 2,17 | 0,7 | Zn | 2,34 | 1,055 |
| Total | 100,000 | 100,000 | Total | 100,000 | 100,000 |

### Schritt 2: Temperaturbehandlung der eingefärbten Glasplättchen

In einem nachfolgenden Schritt wurden die von Salzresten gesäuberten und getrockneten, schwach gelblich gefärbten Glasplättchen in einer flachen Schale in dem Muffelofen etwa 120 min bei einer Temperatur von 600 °C wärmebehandelt. Die wärmebehandelten Glasplättchen bzw. Glaspigmenten waren intensiv gelb gefärbt.

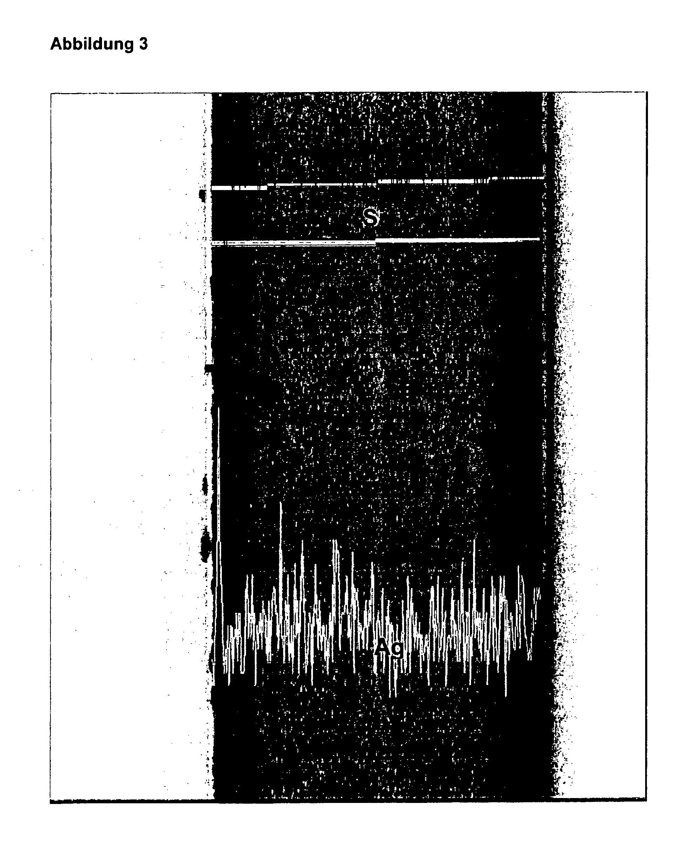

Auch diese Glaspigmente (intensiv gelb eingefärbte Glassplättchen) wurden mittels REM und REM-EDX analysiert. Die Analyse ergab, dass auf der Pigmentoberfläche wenige Silberpartikel vorhanden waren. Dieses Ergebnis wird auch durch einen starken Konzentrationssprung der Silberkonzentration direkt an der Pigmentoberfläche belegt, welches mittels REM-EDX nachgewiesen wurde (**Abb. 3**). Abb.3 zeigt, dass durch die Wärmebehandlung der Glaspigmente Silber aus dem Pigmentinneren auf die Pigmentoberfläche gelangt ist. Der Verlauf der Silberkonzentration entlang der Dickenachse im Glaspigment ist jedoch annähernde konstant. Es ist kein in Richtung des Inneren des Glasplättchens exponentiell abfallendes Konzentrationsprofil wie bei herkömmlichen Diffusionsprozessen erkennbar.

In **Abb. 3** sind weiterhin die durch die Temperaturbehandlung im eingefärbten Glasplättchen bzw. im Glaspigment eingelagerten Silbernanopartikel als schwarze Punkte deutlich zu erkennen.

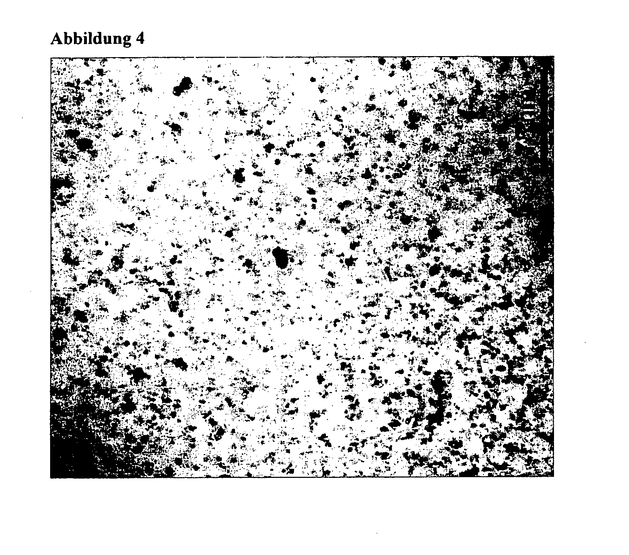

Weiterhin wurden die mit Silber eingefärbten Glasplättchen bzw. die erhalten Glaspigmente mittels TEM (transmission electron microscopy) (CM 70, Phillips) untersucht. Dazu wurde die Pigmentprobe in der Fläche durch Ionenbeschuss (Ar) ausgedünnt und zwar auf Mo-Ring (plane view), einseitig und oberflächennah. Es konnten Silberpartikel im Glas nachgewiesen werden (**Abb. 4**). Die Bestimmung des Materials erfolgte mittels energiedispersiver Spektroskopie von Röntgenstrahlung (EDS) im Gerät.

### Vergleichsbeispiel 1:

Farblose Glasplättchen GF100M wurden in einem 250 ml Becherglas eingewogen, so dass eine 15 Gew.-% wässrige Suspension vorlag. Diese Suspension wurde mittels eines Magnetrührers bei Raumtemperatur gerührt. Anschließend wurden 0,5 g AgNO₃ mit 20 ml VE-Wasser (VE: vollentsalzt) unter Rühren mittels des Magnetrührers gelöst und danach solange NH₃ zugegeben, bis sich der beim ersten Tropfen NH₃ gebildete Niederschlag wieder auflöste. Anschließend wurden 0,9 g KOH in 10 ml VE-Wasser gelöst und zur AgNO₃-Lösung zugegeben. Der gebildete Niederschlag wurde mit NH₃ wieder aufgelöst. Die Lösung wurde in die Glasplättchen enthaltende Suspension eingebracht. Des Weiteren wurden 125 mg in 20 g VE-Wasser gelöste Glukose etwa 30 min lang in die Suspension dosiert und die Suspension ca. 5 min gerührt. Danach wurde die Suspension auf eine Temperatur von 40 °C erwärmt, bis diese schwarz gefärbt war. Danach wurden die Glasplättchen aus der Suspension filtriert und mit Wasser gewaschen. Die erhaltenen Glasplättchen waren grau-braun gefärbt. Durch Zugabe von 10 %iger HNO₃ wurde die Färbung wieder entfernt.

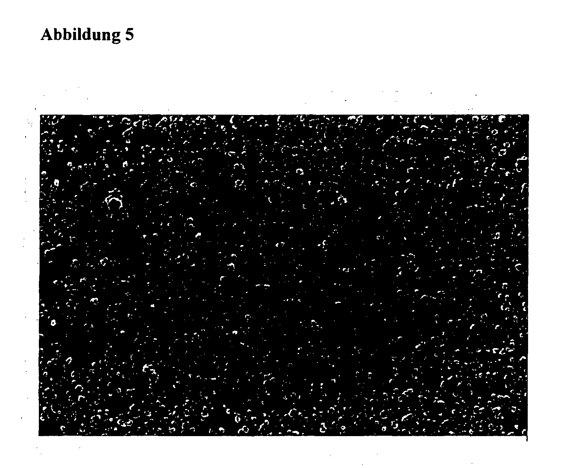

Die REM Aufnahme (**Abb.5**), die vor der Zugabe von 10 %-iger HNO₃ angefertigt wurde, zeigt eine Vielzahl auf der Oberfläche abgeschiedener Silberpartikel. Im Pigmentinneren wurde kein Silber nachgewiesen. Dieses Ergebnis bestätigt, dass nur an der Pigmentoberfläche angelagerte Partikel keine dauerhafte Glaseinfärbung hervorrufen.

### Erfindungsgemäßes Beispiel 2:

Zur Herstellung von grünen Glaspigmenten wurden zunächst 100 g einer Mischung aus Kupfersulfat (CuSO₄) und Natriumsulfat (Na₂SO₄) im molaren Verhältnis von 55/45 mol-% in einem Schmelztiegel in einem Muffelofen etwa 180 min bei einer Temperatur von 580° C geschmolzen. In die blaue Schmelze wurden 1 g farblose Glasplättchen GF100M mittels Rühren eingearbeitet und die Suspension etwa 5 min bei einer Temperatur von 580 °C wärmebehandelt. Die wärmebehandelte Schmelze wurde in ein 10 Liter vollentsalztes Wasser enthaltendes Gefäß eingebracht. Das aus der im Wasser erstarrten Schmelze gebildete Salz wurde unter Rühren vollständig im Wasser gelöst. Anschließend wurden aus der Suspension die behandelten/eingefärbten Glasplättchen filtriert und nachfolgend bei einer Temperatur von 50 °C getrocknet. Es wurden fast farblose Glasplättchen erhalten.

Anschließend wurde ein Teil (Variante 1) dieser der von Salzresten gesäuberten und getrockneten fast farblosen Glasplättchen in einer flachen Schale in dem Muffelofen etwa 60 min bei einer Temperatur von 600 °C wärmebehandelt. Die wärmebehandelten Glasplättchen bzw. erhaltenen Glaspigmente waren intensiv grün gefärbt. Die so erhaltenen roten Glaspigmente (Variante 1) wurden einer REM- und REM-EDX-Analyse unterzogen. Die bestimmten Elementgehalte sind ist in **Tab. 3** angegeben.

Ein weiterer Teil (Variante 2) dieser von Salzresten gesäuberten und getrockneten, fast farblosen Glasplättchen wurde in dem Muffelofen etwa 60 min bei einer Temperatur von 600 °C wärmebehandelt. Jedoch wurde der Muffelofen vor und während der Wärmebehandlung mit Formiergas (5 % Wasserstoff in Stickstoff) gespült. Nach dieser Wärmebehandlung wurden intensiv rote Glasplättchen bzw. Glaspigmente erhalten.

Die so erhaltenen roten Glaspigmente (Variante 2) wurden einer REM- und REM-EDX-Analyse unterzogen. Das in nachfolgender **Tab. 3** dargestellte Analysenergebnis zeigt, dass das im als Ausgangsmaterial zur Pigmentherstellung eingesetzten Glasplättchen enthaltene Natrium durch Kupfer aus der Metallsalzmischung ersetzt wurde: Die entsprechenden Elementgehalte des Ausgangsglases GF100M sind in **Tab. 2** aufgeführt.

**Tab. 3.: Elementgehalte der CuSO₄ behandelten Glassplättchen gemäß Variante 1 und Variante 2**

| **Variante 1** | | | **Variante 2** | | |
|---|---|---|---|---|---|
| Elem | Masse [%] | Atomar [%] | Elem | Masse [%] | Atomar [%] |
| O | 50,035 | 66,33 | O | 38,27 | 55,92 |
| Na | 0,195 | 0,18 | Na | 0,23 | 0,235 |
| Mg | 1,865 | 1,63 | Mg | 1,575 | 1,515 |
| A1 | 2,93 | 2,31 | A1 | 2,815 | 2,435 |
| Si | 28,745 | 21,79 | Si | 33,115 | 27,56 |
| Ag | 0,085 | 0,015 | Ag | 0 | 0 |
| K | 7,975 | 4,37 | K | 10,56 | 6,325 |
| Ca | 3,21 | 1,71 | Ca | 4,82 | 2,815 |
| Ti | 0,195 | 0,09 | Ti | 0,3 | 0,145 |
| Fe | 0,13 | 0,05 | Fe | 0,125 | 0,05 |
| Cu | 2,885 | 0,955 | Cu | 5,125 | 1,89 |
| Zn | 1,75 | 0,575 | Zn | 3,065 | 1,1 |
| Total | 100 | 100 | Total | 100 | 100 |

Auf der Oberfläche dieser farbigen Glaspigmente wurden ebenfalls Kupferpartikel nachgewiesen.

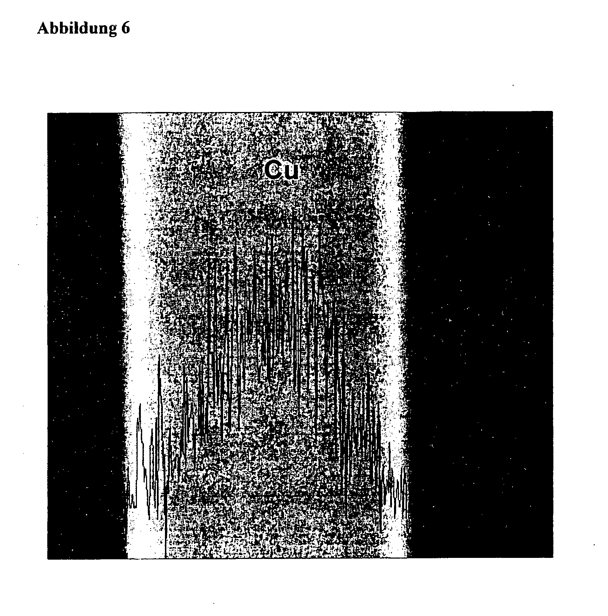

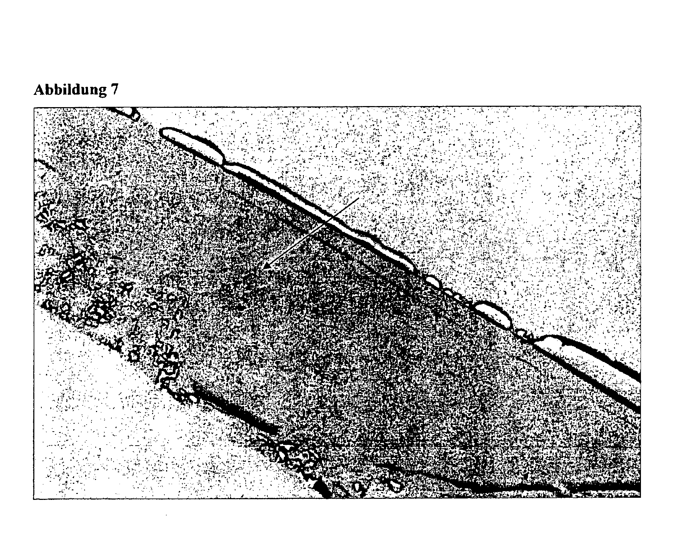

**Abb. 6** zeigt den mittels REM vermessenen Verlauf der Kupferkonzentration entlang der Dickenachse der gemäß Variante 2 erhaltenen eingefärbten Glasplättchen. Die Konzentration im Glaspigment ist relativ konstant. Es bildet sich kein bei Diffusionsprozessen übliches Konzentrationsprofil heraus. Stattdessen bildet sich ein Profil mit einer im Pigmentkern höchsten Konzentration heraus. Diese erhöhte Kupferkonzentration wird durch die hohe Anzahl an in einer REM-Aufnahme sichtbaren Kupferpartikeln im Kern des eingefärbten Glasplättchens bestätigt (**Abb.7**).

Gemäß einer weiteren Variante wurden rote Glasplättchen bzw. Glaspigmente - in vorab beschriebener Weise - hergestellt, jedoch betrug die Kontaktdauer 40 min bei einer Temperatur von 580 °C (Variante 3). Ein Teil der von Salzresten gesäuberten und getrockneten Glasplättchen bzw. Glaspigmente wurde anschließend in einer flachen Schale bei einer Temperatur von 600 °C 90 min im Muffelofen wärmebehandelt. Der Muffelofen wurde vor und während der Wärmebehandlung mit Formiergas (5 % Wasserstoff in Stickstoff) gespült. Nach dieser Wärmebehandlung waren die Glaspigmente intensiv rot gefärbt. Diese Pigmente wurden auch einer REM- und REM-EDX-Analyse unterzogen.

Die Analyse führte zu dem Ergebnis, dass auf der Pigmentoberfläche Kupferpartikel vorhanden waren.

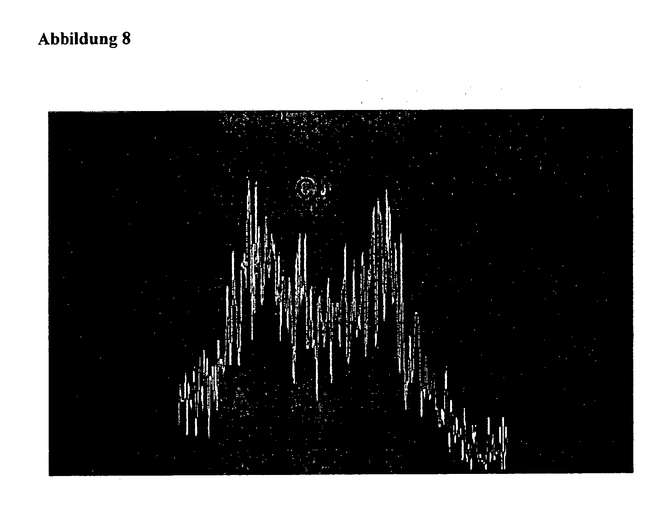

**Abb. 8** zeigt, dass der Verlauf der Kupferkonzentration entlang der Dickenachse im Glasplättchen Glaspigment relativ konstant ist und im Randbereich jeweils abfällt. Es bildete sich kein wie bei herkömmlichen Diffusionsprozessen übliches Konzentrationsprofil heraus, bei dem das Farbmittel in Richtung Zentrum des einzufärbenden Gegenstandes abfällt.

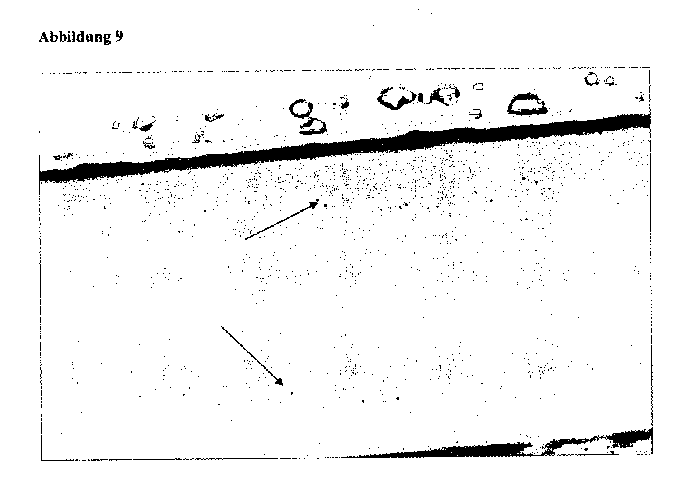

Stattdessen zeigt sich ein Konzentrationsprofil mit zwei Peaks im Glasplättchen- bzw. Pigmentkern. Diese erhöhte Kupferkonzentration in den beiden Bereichen wird durch die Vielzahl an sichtbaren Kupferpartikeln mittels REM-Aufnahme in den jeweiligen Pigmentzonen bestätigt (**Abb. 9**).

### Erfindungsgemäßes Beispiel 3:

Zur Herstellung von blauen Glaspigmenten wurden zunächst 100 g einer Mischung aus 50 % Cobaltsulfat (CoSO₄) und 50 % Natriumchlorid (NaCl) in einen Schmelztiegel in einem Muffelofen etwa 180 min bei 500 °C geschmolzen. In die blaue Schmelze wurden 1g farblose Glasplättchen GF100M eingearbeitet und in dem Muffelofen 60 min bei 500 °C belassen. Anschließend wurde die Schmelze in einen 10 Liter vollentsalztes Wasser enthaltenden Behälter eingebracht. Das sich aus der im Wasser erstarrten Schmelze gebildete Salz wurde unter Rühren vollständig im Wasser gelöst. Anschließend wurde das eingefärbt Glasplättchen bzw. Glaspigment aus der Suspension filtriert und nachfolgend bei einer Temperatur von 50 °C getrocknet. Es wurden schwach blau eingefärbte Glasplättchen bzw. Glaspigmente erhalten.

Anschließend wurde ein Teil der von Salzresten gesäuberten und getrockneten, bläulichen Glasplättchen bzw. -pigmente in einer flachen Schale im Muffelofen 60 min bei 580 °C wärmebehandelt. Es wurden intensiv blaue Glasplättchen bzw. Glaspigmente erhalten.

### Erfindungsgemäßes Beispiel 4:

Für die Herstellung von roten Glaspigmenten wurden zunächst 100g einer Mischung aus 5 % Tetrachlorgoldsäure (HAuCl₄) und 95 % Natriumnitrat (NaNO₃) in einen Schmelztiegel in einem Muffelofen 180 min bei 350°C geschmolzen. Anschließend wurden in die Salzschmelze 1g farblose Glasplättchen GF100M eingearbeitet und 10 min bei 350 °C belassen. Danach wurde die Glasplättchen enthaltende Schmelze in einen 10 Liter vollentsalztes Wasser enthaltenden Behälter eingebracht. Das sich aus der im Wasser erstarrten Schmelze gebildete Salz wurde unter Rühren vollständig im Wasser gelöst. Anschließend wurden die Glasplättchen aus der wässrigen Suspension filtriert und die separierten Glasplättchen bei 50 °C getrocknet. Es wurden fast farblose Glasplättchen erhalten. Ein Teil dieser von Salzresten gesäuberten und getrockneten Glasplättchen wurde in einer flachen Schale im Muffelofen 30 min bei 700 °C wärmebehandelt. Die wärmebehandelten Glasplättchen bzw. Glaspigmente waren intensiv rot gefärbt.

### Erfindungsgemäßes Beispiel 5:

Zur Herstellung von grünen Glaspigmenten wurden zunächst 100g einer Mischung aus 50 % Natriumchromat (Na₂Cr₂O₇) und Natriumnitrat (NaNO₃) in einen Schmelztiegel in einem Muffeloffen 180 min bei 320 °C geschmolzen. In die Salzschmelze wurden 1g farblose Glasplättchen GF100M mittels Rühren eingearbeitet und anschließend in dem Muffelofen 80 min bei 320 °C belassen. Anschließend wurde die Glasplättchen enthaltende Schmelze in einen 10 Liter vollentsalztes Wasser enthaltenden Behälter eingebracht. Das sich aus der im Wasser erstarrten Schmelze bildende Salz wurde unter Rühren vollständig im Wasser gelöst. Danach wurden die Glasplättchen aus der wässrigen Suspension filtriert und die separierten Glasplättchen bei 50 °C getrocknet. Es wurden fast farblose Glasplättchen erhalten. In einem weiteren Schritt wurden ein Teil dieser von Salzresten gesäuberten und getrockneten Glasplättchen in einer flachen Schale in dem Muffelofen 60 min bei 600 °C wärmebehandelt. Es wurden intensiv grün gefärbte Glasplättchen bzw. -pigmente erhalten.

### Erfindungsgemäßes Beispiel 6:

Zur Herstellung von grünen Glaspigmenten wurden zunächst 100 g einer Mischung aus 80 % Eisenchlorid (FeCl₃), 11 % Lithiumchlorid (LiCl) und 9 % Kaliumchlorid (KCl) in einen Schmelztiegel in einem Muffelofen 180 min bei 180 °C geschmolzen. In die Salzschmelze wurden 1g farblose Glasplättchen GF100M mittels Rühren eingearbeitet und 60 min bei 180 °C belassen. Anschließend wurde die Schmelze in einen 10 Liter vollentsalztes Wasser enthaltenden Behälter eingebracht. Das sich im Wasser aus der erstarrten Schmelze gebildete Salz wurde unter Rühren vollständig im Wasser gelöst. Die aus der wässrigen Suspension filtrierten Glasplättchen wurden bei 50 °C getrocknet. Es wurden fast farblose Glasplättchen erhalten. Nachfolgend wurde ein Teil dieser von Salzresten gesäuberten und getrockneten Glasplättchen in einer flachen Schale in dem Muffelofen etwa 1 h bei einer Temperatur von 600 °C wärmebehandelt. Die erhaltenen Glasplättchen bzw. -pigmente waren intensiv blaugrün gefärbt.

### Erfindungsgemäßes Beispiel 7 (Cu-eingefärbte Glasplättchen mit TiO₂-Beschichtung):

Zur Beschichtung von mit dotiertem Kupfer eingefärbten Glasplättchen aus dem erfindungsgemäßen Beispiel 2, nach Behandlung mit Formiergas (Variante 2), mit TiO₂ wurden 50g Glasplättchen GF100M in 280 ml destilliertem Wasser suspendiert und die Suspension unter turbulentem Rühren auf 80 C erhitzt. Anschließend wurde der pH-Wert mit verdünnter Salzsäure auf 1,9 eingestellt und 10 ml einer SnCl₄-Lösung (24g Sn/l) über 1 h in die Suspension getropft. Dabei wurde der pH-Wert durch Gegendosieren mit 10% NaOH konstant auf 1,9 gehalten. Danach wurde zur vollständigen Abscheidung noch 15 min nachgerührt. Anschließend wurde der pH-Wert der Suspension mit verdünnter HCl auf 1.6 abgesenkt und eine TiCl₄-Solution (200 gTiO₂/l) mit 0,07 ml/min in die Suspension getropft. Dabei wurde der pH-Wert durch Gegensteuern mit 10% NaOH konstant bei 1,6 gehalten. Bei Vorliegen von unterschiedlichen Interferenzfarben wurden kleine Zwischenmuster genommen. Sobald das beschichtete Glasplättchen eine grünliche Interferenzfarbe aufwies, wurde der Versuch beendet, das Endmuster abfiltriert und mit VE-Wasser nachgewaschen. Alle Muster wurden bei 650 C für 30min kalziniert.

Es wurden farbstarke Interferenzpigmente mit einer roten Absorptionsfarbe erhalten.

### Erfindungsgemäßes Beispiel 8 (Ag-eingefärbte Glasplättchen mit TiO₂-Beschichtung):

Zur Beschichtung von mit dotiertem Silber eingefärbten Glasplättchen aus dem erfindungsgemäßen Beispiel 1 mit TiO₂ wurden 50 g der Glasplättchen GF100M in 280 ml destilliertem Wasser suspendiert und die Suspension unter turbulentem Rühren auf 80 °C erhitzt. Anschließend wurde der pH-Wert mit verdünnter Salzsäure auf 1,9 eingestellt und 10 ml einer SnCl₄-Lösung (24 g Sn/l) über 1 h in die Suspension getropft. Dabei wurde der pH-Wert durch Gegendosieren mit 10 % NaOH konstant auf 1,9 gehalten. Danach wurde zur vollständigen Abscheidung noch 15 min nachgerührt. Anschließend wurde der pH-Wert der Suspension mit verdünnter HCl auf 1,6 abgesenkt und eine TiCl₄-Solution (200 gTiO₂/l) mit 0.07 ml/min in die Suspension getropft. Dabei wurde der pH-Wert durch Gegensteuern mit 10 % NaOH konstant bei 1,6 gehalten. Bei Vorliegen von unterschiedlichen Interferenzfarben wurden kleine Zwischenmuster genommen. Sobald das beschichtete Glasplättchen eine grünliche Interferenzfarbe aufwies, wurde der Versuch beendet, das Endmuster abfiltriert und mit VE-Wasser nachgewaschen.

Alle Muster wurden bei 650 C für 30 min kalziniert.

Es wurden farbstarke Interferenzpigmente mit einer gelben Absorptionsfarbe erhalten.

### Erfindungsgemäßes Beispiel 9:

Die erfindungsgemäßen Beispiele 1 bis 8 wurden mit der folgenden Abwandlung wiederholt.

Die Abtrennung der Glasplättchen GF100M von der Schmelze, die nach einem der oben genannten erfindungsgemäßen Beispiele hergestellt wurden, erfolgte nicht indem die Schmelze in Wasser gelöst wurde. Vielmehr wurde zunächst eine Schmelze erzeugt. Anschließend wurde ein Filtertiegel aus Quarzglas mit einem porösen Boden der Porosität 0 (QSil AG Quarzschmelze Ilmenau, Ilmenau) in die Glasschmelze zum Teil eingetaucht, so dass der Tiegel zu 2/3 mit Schmelze gefüllt war. Anschließend wurden die ungefärbten Glasplättchen GF100M in die Schmelze, die sich in dem Filtertiegel befand, unter Rühren eingebracht. Nach der Zeit, die für die Diffusion notwendig war, wurde der Tiegel langsam nach oben aus der Schmelze gezogen, wobei ein Großteil der Schmelze nach unten durch den porösen Boden ablief. Anschließend wurde der Tiegel mit den Glasplättchen und den Resten an Schmelze an der Raumluft gekühlt. Die Glasplättchen wurden anschließend mittels Wasser aus dem Tiegel gelöst, wobei gleichzeitig die geringen Reste an Salz in Lösung gingen. Anschließend wurde wie in den Beispielen beschrieben weiter verfahren. Durch diese Methode wurde die Menge an Salz, welche sich anschließend in der Flüssigkeit befand im Vergleich zu den bisherigen Beispielen deutlich, d.h. auf weniger als 10 Gew.-%, reduziert.

### Vergleichsbeispiel 2

Das Beispiel 3 gemäß der WO 2008/125857 wurde mit der Abwandlung als Vergleichsbeispiel 2 wiederholt, dass anstelle der farblosen Glassplättchen GF300M von der Fa. Glassflake Ltd., England, die farblosen Glassplättchen GF100M von der Fa. Glassflake Ltd., England, verwendet wurden.

Die so erhaltenen roten Glasplättchen (Variante 1) wurden einer REM- und REM-EDX-Analyse unterzogen. Die bestimmten Elementgehalte sind in **Tab. 4** unter Variante 1 aufgeführt. Die Elementgehalte des Ausgangsglases GF100M sind in **Tab. 2** (linke Spalte) angegeben.

Ein weiterer Teil (Variante 2) der so erhaltenen Glasplättchen wurde in einem Muffelofen etwa 60 min bei einer Temperatur von 600 °C wärmebehandelt. Dabei wurde der Muffelofen vor und während der Wärmebehandlung mit Formiergas (5 % Wasserstoff in Stickstoff) gespült. Nach dieser Wärmebehandlung wurde die so erhaltenen roten Glasplättchen einer REM- und REM-EDX-Analyse unterzogen. Die bestimmten Elementgehalte sind in **Tab. 4** unter Variante 2 aufgeführt. Die Elementgehalte des Ausgangsglases GF100M sind in **Tab. 2** (linke Spalte) angegeben.

**Tabelle 4**

| **Variante 1** | | | **Variante 2** | | |
|---|---|---|---|---|---|
| **Elem** | **Masse-%** | **Atomar-%** | **Elem** | **Masse-%** | **Atomar-%** |
| | | | | | |
| O | 40,44 | 57,25 | O | 42,64 | 58,93 |
| Na | 2,71 | 2,67 | Na | 2,69 | 2,58 |
| Mg | 0,88 | 0,82 | Mg | 0,76 | 0,69 |
| Al | 2,85 | 2,39 | Al | 2,64 | 2,17 |
| Si | 37,41 | 30,17 | Si | 38,86 | 30,59 |
| Ag | 0,20 | 0,04 | Ag | 0,34 | 0,07 |
| K | 1,18 | 0,68 | K | 1,01 | 0,57 |
| Ca | 3,92 | 2,21 | Ca | 2,17 | 1,20 |
| Ti | 0,52 | 0,25 | Ti | 0,85 | 0,39 |
| Fe | 0,14 | 0,05 | Fe | 0,13 | 0,05 |
| Cu | 7,91 | 2,82 | Cu | 7,59 | 2,64 |
| Zn | 1,85 | 0,64 | Zn | 0,32 | 0,11 |
| Total | 100,00 | 100,00 | Total | 100,00 | 100,00 |

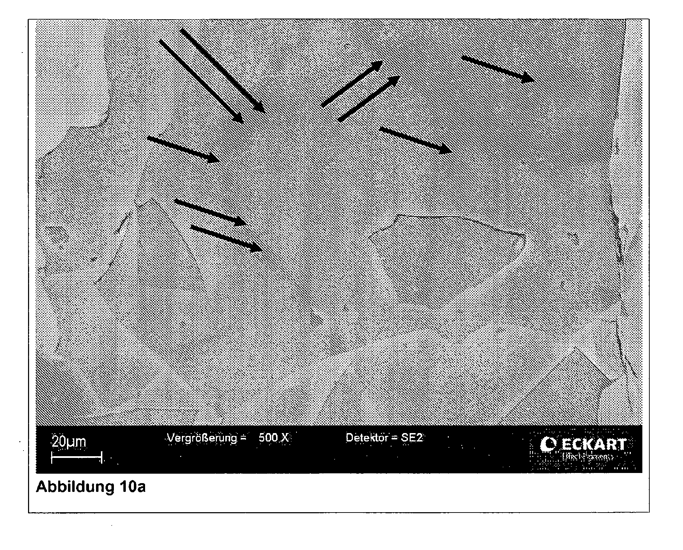

In **Abb. 10a** sind REM-Aufnahmen der eingefärbten Glasplättchen gemäß Variante 1 des Vergleichsbeispiels 2 wiedergegeben. Die so erhaltenen eingefärbten Glasplättchen weisen Verformungen auf und sind mithin nicht plan. An den mit Pfeilen gekennzeichneten Bereichen sind die Verformungen in Form von Kanten und Ecken, die "Abdrücke" darunterliegender Glaspigmente sind, erkennbar.

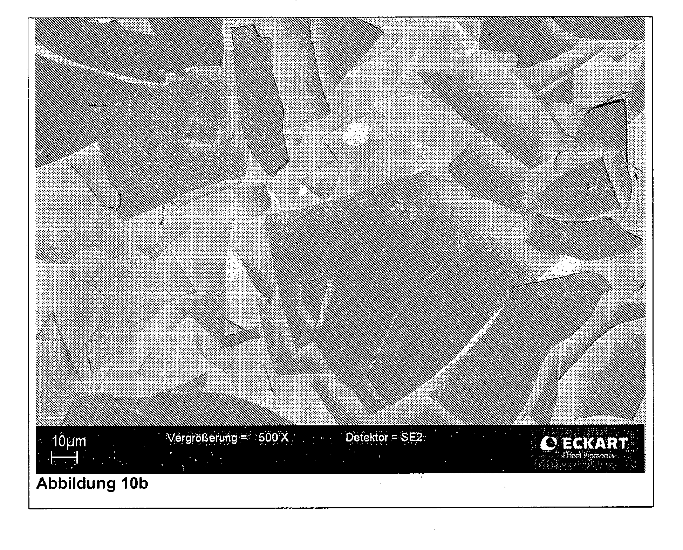

In **Abb. 10b** sind REM-Aufnahmen von erfindungsgemäßen eingefärbten Glasplättchen gemäß Variante 1 des erfindungsgemäßen Beispiels 2 wiedergegeben. Die so erhaltenen eingefärbten Glasplättchen weisen keine Verformungen auf und sind mithin plan.

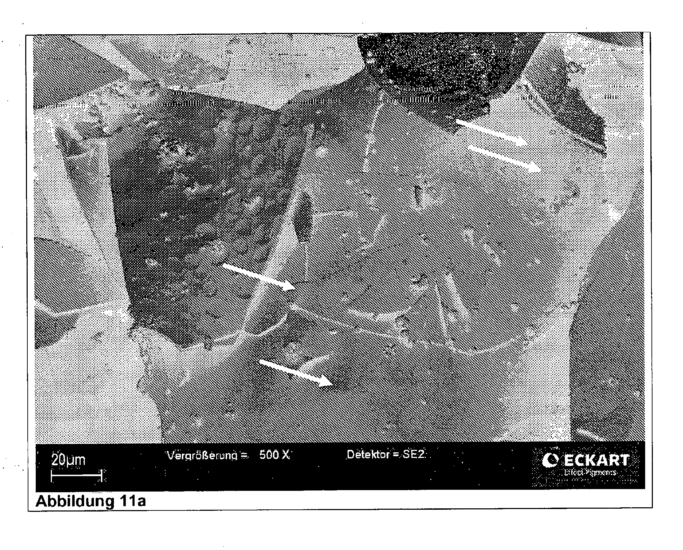

In **Abb. 11a** sind REM-Aufnahmen der eingefärbten Glasplättchen gemäß Variante 2 des Vergleichsbeispiels 2 wiedergegeben. Die so erhaltenen eingefärbten Glasplättchen weisen Verformungen auf und sind mithin nicht plan. An den mit Pfeilen gekennzeichneten Bereichen sind die Verformungen in Form von Kanten und Ecken, die "Abdrücke" darunterliegender Glasplättchen sind, erkennbar. Darüber hinaus ist erkennbar, dass nach der Reduktion mit Formiergas die Glasplättchen Krater oder Vertiefungen aufweisen, die ebenfalls die Qualität der erhaltenen Glasplättchen stark vermindern.

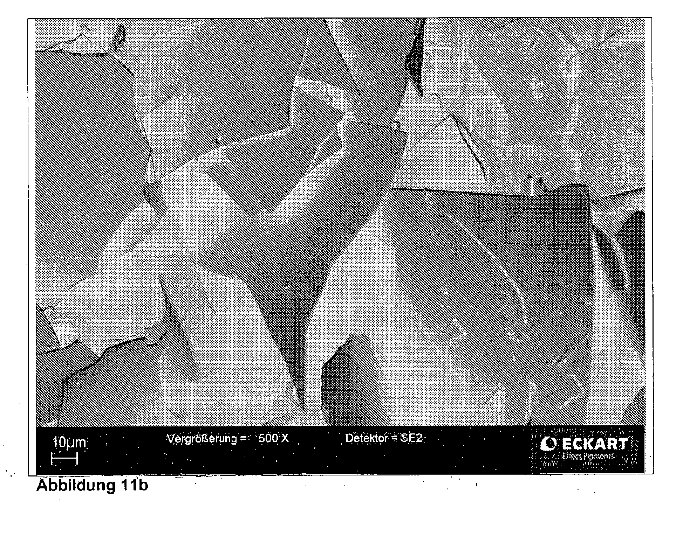

In **Abb. 11 b** sind REM-Aufnahmen von erfindungsgemäßen eingefärbten Glasplättchen gemäß Variante 1 des erfindungsgemäßen Beispiels 2 wiedergegeben. Die so erhaltenen eingefärbten Glasplättchen weisen keine Verformungen auf und sind mithin plan.

### Vergleichsbeispiel 3

Das Beispiel 5 gemäß der WO 2008/125857 wurde mit der Abwandlung als Vergleichsbeispiel 3 wiederholt, dass anstelle der farblosen Glassplättchen GF300M von der Fa. Glassflake Ltd., England, die farblosen Glassplättchen GF100M von der Fa. Glassflake Ltd., England, verwendet wurden.

Die so erhaltenen gelben Glasplättchen wurden einer REM- und REM-EDX-Analyse unterzogen. Die bestimmten Elementgehalte sind in **Tab. 5** aufgeführt. Die Elementgehalte des Ausgangsglases GF100M sind in **Tab. 2** (linke Spalte) angegeben.

**Tabelle 5**

| Elem | Masse-% | Atomar-% |
|---|---|---|
| O | 46,36 | 61,65 |
| Na | 8,49 | 7,86 |
| Mg | 1,12 | 0,98 |
| Al | 2,53 | 2,00 |
| Si | 31,43 | 23,81 |
| Ag | 4,01 | 0,79 |
| K | 1,51 | 0,82 |
| Ca | 2,83 | 1,50 |
| Ti | 0,35 | 0,16 |
| Fe | 0,00 | 0,00 |
| Cu | 0,13 | 0,04 |
| Zn | 1,24 | 0,40 |
| Total | 100,00 | Total 100,00 |

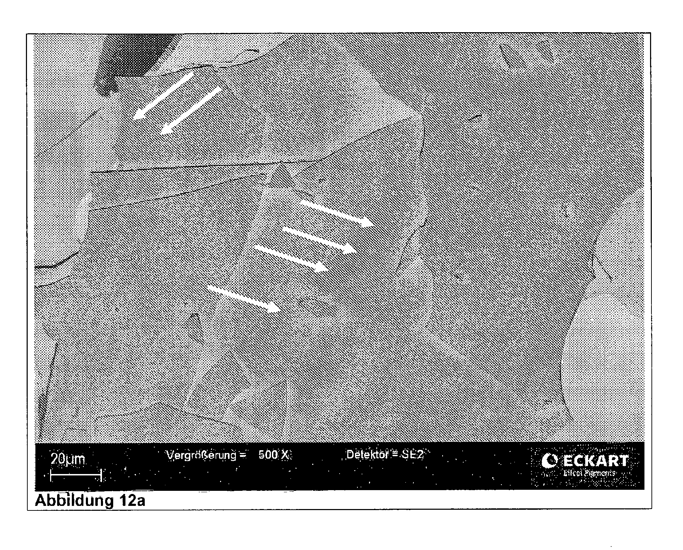

In **Abb. 12a** sind REM-Aufnahmen der eingefärbten Glasplättchen des Vergleichsbeispiels 3 wiedergegeben. Die so erhaltenen eingefärbten Glasplättchen weisen Verformungen auf und sind mithin nicht plan. An den mit Pfeilen gekennzeichneten Bereichen sind die Verformungen in Form von Kanten und Ecken, die "Abdrücke" darunterliegender Glasplättchen sind, erkennbar.

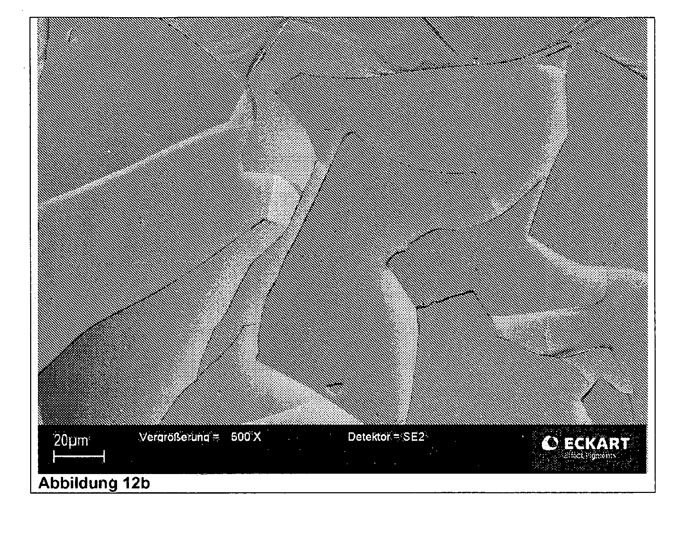

In **Abb. 12b** sind REM-Aufnahmen von erfindungsgemäßen eingefärbten Glasplättchen des erfindungsgemäßen Beispiels 1 wiedergegeben. Die so erhaltenen eingefärbten Glasplättchen weisen keine Verformungen auf und sind mithin plan.

### Erfindungsgemäßes Beispiel 10 (Lidschatten):

Zur Herstellung eines roten Lidschattens wurden die in Tabelle 6 angegebenen Inhaltsstoffe wie folgt verarbeitet: Zunächst wurden alle unter A genannten Bestandteile vermischt und für 30 Sekunden mit einem Hochgeschwindigkeitsmischaggregat bei 2500 U/min gemischt. Anschließend wurden die Komponenten B zugefügt und für 60 Sekunden mit einem Hochgeschwindigkeitsmischaggregat bei 3000 U/min gemischt. Abschließend wurde die Mischung bei 150 bar für 30 Sekunden gepresst.

**Tabelle 6:**

| INCI Name | Produkt Name | Massenanteil [%] | Lieferant |
|---|---|---|---|
| ***Phase A*** | | 100.00 | |
| Mica | Silk Mica | 17.00 | www.vwr.com |
| Boron Nitride | Softouch CCS 102 | 2.50 | www.advceramicscos. com |
| Zinc Stearate | Kemilub EZ-V | 7.00 | www.undesa.com |
| Talc | Talc Powder | ad 100 | www.riedeldehaen. com |
| Kupfereingefärbte Glasplättchen mit roter Absorptionsfarbe und TiO₂ Beschichtung | Gemäß Beispiel 7 | 5.00 - 40.00 | www.eckart.net |

| ***Phase B*** | | | |
|---|---|---|---|
| Dimethicone | Dow Corning® 200 Fluid 5 cst | 5.00 | www.dowcorning. com |
| Cyclomethicone (and) Dimethicone Crosspolymer | Dow Corning® 9040 Elastomer | 5.00 | www.dowcorning. com |

### Erfindungsgemäßes Beispiel 11 (Lip gloss):

Zur Herstellung eines roten Lip gloss wurden die in nachfolgender Tabelle 7 angegebenen Inhaltsstoffe wie folgt verarbeitet: Zunächst wurden alle Komponenten unter A (Tabelle 7) miteinander vermischt. Die Mischung wurde anschließend auf 85 °C erhitzt. Unter Rühren wurde Komponente B (Tabelle 7) zugegeben und homogenisiert.

**Tabelle 7:**

| INCl Name | Produkt Name | Massenanteil [%] | Lieferant |
|---|---|---|---|
| ***Phase A*** | | 100.00 | |
| Hydrogenated Polyisobutene (und) Ethylene/Propylene/Styrene Copolymer (und) Butylene/Ethylene/Styrene Copolymer | Versagel ME 750 | ad 100 | www.penreco. com |
| Simmondsia Chinensis (Jojoba) Seed Oil | Jojoba Oil - Natural/Golden | 2.00 | www.biochemica. com |
| Caprylyl Trimethicone | Silcare Silicone 31 M50 | 7.00 | www.clariant.com |
| Stearyl Dimethicone | Silcare Silicone 41 M65 | 3.20 | www.clariant.com |
| Hydrogenated Polydecene | Nexbase 2002 | 4.00 | www.jandekker. com |
| Isopropyl Myristate | Isopropyl Myristate | 4.50 | www.vwr.com |

| ***Phase B*** | | | |
|---|---|---|---|
| Kupfereingefärbte Glasplättchen mit roter Absorptionsfarbe und TiO₂ Beschichtung | Gemäß Bsp. 7 | 15.00 | www.eckart.net |

### Erfindungsgemäßes Beispiel 12 (Körperlotion):

Zur Herstellung einer roten Körperlotion wurden die in nachfolgender Tabelle 8 angegebenen Inhaltsstoffe wie folgt verarbeitet: Zunächst wurden die Komponenten A vermischt und anschließend unter Rühren die Komponenten B zugegeben. Die Mischung wurde unter Rühren auf 80 °C erhitzt. In der Zwischenzeit wurden alle Komponenten C vermischt und unter Rühren auf 80 °C erhitzt. Anschließend wurde die Mischung C zu der Mischung aus A und B unter Schütteln gegeben. Die Mischung aus A, B, und C wurde auf 50 °C gekühlt und anschließend die Komponenten D zugegeben. Diese Mischung wurde für einige Zeit bei 40 °C bis 50 °C gerührt. Abschließend wurde die Mischung auf Raumtemperatur abgekühlt.

**Tabelle 8:**

| **INCI Name** | **Produkt Name** | **Massenanteil [%]** | **Lieferant** |
|---|---|---|---|
| ***Phase A*** | | 100.00 | |
| Water | | ad 100 | |
| Carbomer | Acritamer 934 | 0.50 | www.ritacorp. com |

| ***Phase B*** | | | |
|---|---|---|---|
| Propylene Glycol | 1,2 Propandiol | 2.75 | www.vwr.com |
| Glycerin | Pricerine 9090 | 0.50 | www.uniqema. com |

| ***Phase C*** | | | |
|---|---|---|---|
| Kupfereingefärbte Glasplättchen mit roter Absorptionsfarbe und Ti02 Beschichtung | Gemäß Bsp. 7 | 15.00 | www.eckart.net |
| Isopropyl Palmitate | Rita IPP NF | 2.00 | www.ritacorp. com |
| Glyceryl Stearate | Imwitor 960 K | 2.00 | www.sasolwax. com |
| Stearic Acid | Kortacid 1895 | 2.00 | www.akzonobel. com |
| Butyrospermum Parkii Butter (Shea Butter) | Shea Butter | 2.00 | www.jandekker. com |
| Cetyl Alcohol | Cetyl Alcohol | 1.00 | www.vwr.com |
| Cyclomethicone | Dow Corning 345 Fluid | 0.20 | www.dowcorning .com |
| Dimethicone | Dow Corning 200 Fluid/350 cst | 0.20 | www.dowcorning .com |
| Isostearyl Lactate | Patlac IL | 2.00 | www.ritacorp. com |
| Methylparaben, Propylparaben | Rokonsal SSH-1 | 0.30 | www.biochema. com |
| Tocopheryl Acetate | DL-Alpha-Tocopherolacetat | 0.10 | www.roche.com |

| ***Phase D*** | | | |
|---|---|---|---|
| Triethanolamine | Triethanolamine | 0.75 | www.vwr.com |
| Panthenol | D- Panthenol 75 L | 0.50 | www.basf.com |
| Fragrance | Palma Energy DF05 | q.s. | www.bell-europe.com |

### Erfindungsgemäßes Beispiel 13 (Crème-Lidschatten):

Zur Herstellung eines roten Crème-Lidschattens wurden die in Tabelle 9 angegebenen Inhaltsstoffe wie folgt verarbeitet: Zunächst wurden die Komponenten A vermischt und auf 85 °C erwärmt. Dann wurde unter Rühren die Komponenten B (Farbstarke Interferenzpigmente mit roter Absorptionsfarbe) zugegeben und bei 85 °C gründlich gemischt, bis ein homogenes Erscheinungsbild erreicht wurde. Anschließend wurde die Masse im heißen Zustand in die Verpackung abgefüllt.

**Tabelle 9:**

| **INCI Name** | **Produkt Name** | **Massenanteil [%]** | **Lieferant** |
|---|---|---|---|
| ***Phase A*** | | 100.00 | |
| Castor Oil | Castor Oil | ad 100 | www.riedeldehae n.com |
| Octyl Palmitate | Liponate EHP | 6.00 | www.lipochemic als.com |
| Coconut Oil | Lipovol C-76 | 7.00 | www.lipochemic als.com |
| Bees Wax | Ewacera 12 | 8.00 | www.wagnerlano lin.com |
| Isopropyl Lanolate | Isopropyl Lanolate | 5.00 | www.wagnerlano lin.com |
| Prunus Armeniaca (Apricot) Kernel Oil and Hydrogenated Apricot Kernel Oil | Apricot Butter | 7.00 | www.impag.de |
| Magnesium Stearate | Magnesium Stearate | 5.00 | www.sigmaaldric h.com |
| Bis-Hydroxyethoxypropyl Dimethicone | Dow Corning 5562 Carbinol Fluid | 5.00 | www.dowcorning .com |
| Phenoxyethanol (and) Methylparaben (and) Ethylparaben (and) Butylparaben | Uniphen-23 | 0.30 | www.permcos.co m |

| ***Phase B*** | | | |
|---|---|---|---|
| **Farbstarke Interferenzpigmente mit roter Absorptionsfarbe** | **Gemäß Bsp.7** | **22.00** | **www.eckart.net** |

### Bevorzugte Aspekte der Erfindung:

1. Die Erfindung betrifft mit wenigstens einem Farbmittel eingefärbte Glaspartikel, dadurch gekennzeichnet, dass die eingefärbten Glaspartikel Glasplättchen mit einem mittleren Durchmesser von 1 bis 500 µm sind und die Farbmittel metallische Nanopartikel und/oder Metalloxide umfassen oder daraus bestehen, wobei die Glasplättchen plan sind und die Farbmittel in einer Konzentration aus einem Bereich von 1 bis 55 Gew.-%, bezogen auf das Gesamtgewicht der eingefärbten Glasplättchen, vorliegen.
2. Gemäß einem Aspekt 2 der Erfindung betrifft diese eingefärbte Glaspartikel nach Aspekt 1, dadurch gekennzeichnet, dass der Konzentrationsverlauf an Farbmittel im eingefärbten Glasplättchens über die Dicke des eingefärbten Glasplättchens weniger als 10 Gew-.%, vorzugsweise weniger als 5 Gew.-%, abfällt, konstant ist oder in bezug auf den Randbereich des Glasplättchens im Inneren des Glasplättchens erhöht ist.
3. Gemäß einem Aspekt 3 der Erfindung betrifft diese eingefärbte Glaspartikel nach einem der Aspekte 1 oder 2, dadurch gekennzeichnet, dass die eingefärbten Glasplättchen einen Gehalt an Farbmitteln im Bereich von 1,5 bis 40 Gew.-%, bezogen auf das Gesamtgewicht der eingefärbten Glasplättchen, aufweisen.
4. Gemäß einem Aspekt 4 der Erfindung betrifft diese eingefärbte Glaspartikel nach einem der vorherigen Aspekte, dadurch gekennzeichnet, dass die metallischen Nanopartikel aus der Gruppe, die aus Gold, Silber, Kupfer, Eisen, Chrom, Cobalt, Nickel, Platin, Legierungen dieser Metalle, Mischungen dieser Metalle und Kern-Mantel-Partikel dieser Metalle besteht, ausgewählt wird.
5. Gemäß einem Aspekt 5 der Erfindung betrifft diese eingefärbte Glaspartikel nach einem der vorherigen Aspekte, dadurch gekennzeichnet, dass die metallischen Nanopartikel eine mittlere Größe aus einem Bereich von 1 bis 200 nm aufweisen.
6. Gemäß einem Aspekt 6 der Erfindung betrifft diese eingefärbte Glaspartikel nach einem der Aspekte 1 bis 3, dadurch gekennzeichnet, dass das Farbmittel wenigstens ein Metalloxid umfasst.
7. Gemäß einem Aspekt 7 der Erfindung betrifft diese eingefärbte Glaspartikel nach einem der vorherigen Aspekte, dadurch gekennzeichnet, dass die eingefärbten Glasplättchen in bezug auf den Durchmesser der Glasplättchen in einer Partikelverteilung vorliegen, wobei der Anteil der planaren Glasplättchen in der Fraktion ≥ D₃₀ bis D₁₀₀ der Partikelverteilung wenigstens 50 %, bezogen auf die Anzahl sämtlicher Glasplättchen in der Fraktion ≥ D₃₀ bis D₁₀₀, beträgt.
8. Gemäß einem Aspekt 8 der Erfindung betrifft diese eingefärbte Glaspartikel nach Aspekt 7, dadurch gekennzeichnet, dass die Partikelverteilung einen D₁₀> 1 µm und einen D₉₀ ≤ 500 µm aufweist.
9. Gemäß einem Aspekt 9 der Erfindung betrifft diese eingefärbte Glaspartikel einem der vorherigen Aspekte, dadurch gekennzeichnet, dass die eingefärbten Glasplättchen eine mittlere Dicke von 30 bis 3.000 nm aufweisen.
10. Gemäß einem Aspekt 10 der Erfindung betrifft diese eingefärbte Glaspartikel nach einem der vorherigen Aspekte, dadurch gekennzeichnet, dass die eingefärbten Glasplättchen 30 bis 80 Gew.-% Siliziumoxid, bezogen auf das Gesamtgewicht der eingefärbten Glasplättchen, enthalten.
11. Gemäß einem Aspekt 11 der Erfindung betrifft diese eingefärbte Glaspartikel nach einem der vorherigen Aspekte, dadurch gekennzeichnet, dass der Gehalt an Alkalioxiden in den Glasplättchen in einem Bereich von 0 bis 15 Gew.-%, vorzugsweise von 0,1 bis 12 Gew.-%, weiter bevorzugt von 0,2 bis 8 Gew.-%, liegt.
12. Gemäß einem Aspekt 12 der Erfindung betrifft diese eingefärbte Glaspartikel nach einem der vorherigen Aspekte, dadurch gekennzeichnet, dass die eingefärbten Glasplättchen mindestens eine Beschichtung aufweisen.
13. Gemäß einem Aspekt 13 der Erfindung betrifft diese eingefärbte Glaspartikel nach Aspekt 12, dadurch gekennzeichnet, dass die mindestens eine Beschichtung ein Material oder mehrere Materialien, die aus der Gruppe, die aus Metallen, Metallchalkogeniden, insbesondere Metalloxiden, Metallhydroxiden, Metallsuboxiden, Metalloxidhydraten, Metallsulfiden, sowie Metallfluoriden, Metallnitriden, Metallcarbiden als auch deren Mischungen und deren Kombinationen besteht, ausgewählt werden, umfasst oder daraus besteht.
14. Gemäß einem Aspekt 14 der Erfindung betrifft diese ein Verfahren zur Herstellung von eingefärbten Glaspartikeln, dadurch gekennzeichnet, dass das Verfahren folgende Schritte umfasst:
   (a) inkontaktbringen von Alkalioxid-haltigen Glaspartikeln mit einer färbenden Metallsalzschmelze, wobei die färbende Metallsalzschmelze wenigstens ein färbendes Metallsalz und wenigstens ein den Schmelzpunkt des färbenden Metallsalzes absenkendes Mittel enthält und die Temperatur der färbenden Metallsalzschmelze unterhalb der Schmelztemperatur der Glaspartikel liegt, für einen ausreichenden Zeitraum unter Erhalt von eingefärbten Glaspartikeln,
   (b) Abtrennen der in Schritt (a) erhaltenen eingefärbten Glaspartikel von der färbenden Metallsalzschmelze,
   (c) optional Waschen der in Schritt (b) abgetrennten eingefärbten Glaspartikel,
   (d) optional Trocknen der in Schritt (c) gewaschenen eingefärbten Glaspartikel,
   (e) optional Erwärmen der in Schritt (b), (c) oder (d) erhaltenen eingefärbten Glaspartikel und
   (f) optional Abkühlen und Waschen der in Schritt (e) erwärmten eingefärbten Glaspartikel.
15. Gemäß einem Aspekt 15 der Erfindung betrifft diese das Verfahren nach Aspekt 14, dadurch gekennzeichnet, dass die in Schritt (a) verwendete färbende Metallsalzschmelze wenigstens ein färbendes Metallsalz und als den Schmelzpunkt des färbenden Metallsalzes absenkendes Mittel wenigstens ein nicht färbendes Metallsalz umfasst.
16. Gemäß einem Aspekt 16 der Erfindung betrifft diese das Verfahren nach einem der Aspekte 14 oder 15, dadurch gekennzeichnet, dass das färbende Metallsalz Ionen, bevorzugt Kationen enthält, die der Gruppe, die aus Gold, Silber, Kupfer, Eisen, Cobalt, Chrom, Selen, Nickel, Mangan, und deren Mischungen besteht, ausgewählt wird.
17. Gemäß einem Aspekt 17 der Erfindung betrifft diese das Verfahren nach einem der Aspekte 14 bis 16, dadurch gekennzeichnet, dass das färbende Metallsalz Anionen aufweist, die aus der Gruppe, die aus Sulfaten, Sulfiden, Nitraten, Nitriten, Halogeniden, Oxiden und Mischungen davon besteht, ausgewählt wird.
18. Gemäß einem Aspekt 18 der Erfindung betrifft diese das Verfahren nach einem der Aspekte 14 bis 17, dadurch gekennzeichnet, dass das färbende Metallsalz aus der Gruppe, die aus AgNO₃, CuCl₂, CuBr₂, CuI₂, AgCl, AgBr, Agl, CuSO₄, CoSO₄, Ag₂SO₄, CoCl₂, HAuCl₄, KAuCl₄ und deren Mischungen besteht, ausgewählt wird.
19. Gemäß einem Aspekt 19 der Erfindung betrifft diese das Verfahren nach einem der Aspekte 14 bis 17, dadurch gekennzeichnet, dass das färbende Metallsalz aus der Gruppe, die aus Na₂Cr₂O₇, FeCl₃, FeSO₄ und deren Mischungen besteht, ausgewählt wird.
20. Gemäß einem Aspekt 20 der Erfindung betrifft diese das Verfahren nach einem der Aspekte 14 bis 19, dadurch gekennzeichnet, dass das nicht färbende Metallsalz aus der Gruppe, die aus Natriumnitrat (Na₂NO₃), Natriumsulfat (Na₂SO₄), Natriumchlorid (NaCl), Lithiumchlorid (LiCl), Kaliumchlorid (KCI) und Mischungen davon besteht, ausgewählt wird.
21. Gemäß einem Aspekt 21 der Erfindung betrifft diese das Verfahren nach einem der Aspekte 14 bis 20, dadurch gekennzeichnet, dass Schritt (a) unter Schutzgasatmosphäre oder unter einer reaktiven Gaszusammensetzung durchgeführt wird.
22. Gemäß einem Aspekt 22 der Erfindung betrifft diese das Verfahren nach einem der Aspekte 14 bis 21, dadurch gekennzeichnet, dass die Glaspartikel Glassplättchen umfassen oder sind.
23. Gemäß einem Aspekt 23 der Erfindung betrifft diese das Verfahren nach Aspekt 22, dadurch gekennzeichnet, dass die eingefärbten Glasplättchen plan sind.
24. Gemäß einem Aspekt 24 der Erfindung betrifft diese das Verfahren nach Aspekt 23, dadurch gekennzeichnet, dass die eingefärbten Glasplättchen in bezug auf den Durchmesser der Glasplättchen in einer Partikelverteilung vorliegen, wobei der Anteil der planaren Glasplättchen in der Fraktion ≥ D₃₀ bis D₁₀₀ der Partikelverteilung wenigstens 50 %, bezogen auf die Anzahl sämtlicher Glasplättchen in der Fraktion ≥ D₃₀ bis D₁₀₀, beträgt.
25. Gemäß einem Aspekt 25 der Erfindung betrifft diese das Verfahren nach Aspekt 24, dadurch gekennzeichnet, dass die Partikelverteilung einen D₁₀ ≥ 1 µm und einen D₉₀ ≤ 500 µm aufweist.
26. Gemäß einem Aspekt 26 der Erfindung betrifft diese das Verfahren einem der Aspekte 22 bis 25, dadurch gekennzeichnet, dass die eingefärbten Glasplättchen eine mittlere Dicke von 30 bis 3.000 nm aufweisen.
27. Gemäß einem Aspekt 27 der Erfindung betrifft diese das Verfahren nach einem der Aspekte 14 bis 26, dadurch gekennzeichnet, dass die eingefärbten Glaspartikel mit wenigstens einer weiteren, vorzugsweise umhüllenden, Beschichtung versehen werden.
28. Gemäß einem Aspekt 28 der Erfindung betrifft diese eine Verwendung der eingefärbten Glasartikel nach einem der Aspekte 1 bis 13 in Effektpigmenten, Farben, Druckfarben, Lacken, Beschichtungen, Pulverbeschichtungen, Kunststoffen, in keramischen Artikeln, in Formulierungen der dekorativen und/oder pflegenden Kosmetik, landwirtschaftlichen Folien, Nahrungsmittelverpackungen, Schmuck, Kunstgegenständen, Dekorationsartikeln.
29. Gemäß einem Aspekt 29 der Erfindung betrifft diese ein Mittel, insbesondere Effektpigment, Farbe, Druckfarbe, Lack, Beschichtungsmittel, Pulverbeschichtungsmittel, Kunststoff, Keramik, dekoratives und/oder pflegendes Kosmetikum, landwirtschaftliche Folie, Nahrungsmittelverpackung, Schmuck, Kunstgegenstand, Dekorationsartikel, dadurch gekennzeichnet, dass das Mittel eingefärbte Glaspartikel nach einem der Aspekte 1 bis 13 enthält oder aufweist.
30. Gemäß einem Aspekt 30 der Erfindung betrifft diese einen Gegenstand, dadurch gekennzeichnet, dass der Gegenstand mit eingefärbten Glaspartikeln gemäß einem der Ansprüche 1 bis 13 oder mit einem Mittel gemäß Aspekt 29 versehen ist oder eingefärbte Glaspartikel aufweist.

## Patentansprüche

1. Mit wenigstens einem Farbmittel eingefärbte Glaspartikel,
**dadurch gekennzeichnet,**
**dass** die eingefärbten Glaspartikel Glasplättchen mit einem mittleren Durchmesser von 1 bis 500 µm sind und die Farbmittel metallische Nanopartikel und/oder Metalloxide umfassen oder daraus bestehen, wobei die Glasplättchen plan sind und die Farbmittel in einer Konzentration aus einem Bereich von 1 bis 55 Gew.-%, bezogen auf das Gesamtgewicht der eingefärbten Glasplättchen, vorliegen, wobei die eingefärbten Glaspartikel erhältlich sind durch ein Verfahren mit folgenden Schritten:
(a) Inkontaktbringen von Alkalioxid-haltigen Glaspartikeln mit einer färbenden Metallsalzschmelze, wobei die färbende Metallsalzschmelze wenigstens ein färbendes Metallsalz und wenigstens ein den Schmelzpunkt des färbenden Metallsalzes absenkendes Mittel enthält und die Temperatur der färbenden Metallsalzschmelze unterhalb der Schmelztemperatur der Glaspartikel liegt, für einen ausreichenden Zeitraum unter Erhalt von eingefärbten Glaspartikeln,
(b) Abtrennen der in Schritt (a) erhaltenen eingefärbten Glaspartikel von der färbenden Metallsalzschmelze,
(c) optional Waschen der in Schritt (b) abgetrennten eingefärbten Glaspartikel,
(d) optional Trocknen der in Schritt (c) gewaschenen eingefärbten Glaspartikel,
(e) optional Erwärmen der in Schritt (b), (c) oder (d) erhaltenen eingefärbten Glaspartikel und
(f) optional Abkühlen und Waschen der in Schritt (e) erwärmten eingefärbten Glaspartikel.

2. Eingefärbte Glaspartikel nach Anspruch 1,
**dadurch gekennzeichnet,**
**dass** der Konzentrationsverlauf an Farbmittel im eingefärbten Glasplättchens über die Dicke des eingefärbten Glasplättchens weniger als 10 Gew.-%, vorzugsweise weniger als 5 Gew.-%, abfällt, konstant ist oder in bezug auf den Randbereich des Glasplättchens im Inneren des Glasplättchens erhöht ist.

3. Eingefärbte Glaspartikel nach einem der vorherigen Ansprüche,
**dadurch gekennzeichnet,**
**dass** die metallischen Nanopartikei aus der Gruppe, die aus Gold, Silber, Kupfer, Eisen, Chrom, Cobalt, Nickel, Platin, Legierungen dieser Metalle, Mischungen dieser Metalle und Kern-Mantel-Partikel dieser Metalle besteht, ausgewählt wird.

4. Eingefärbte Glaspartikel nach einem der vorherigen Ansprüche,
**dadurch gekennzeichnet,**
**dass** die metallischen Nanopartikel eine mittlere Größe aus einem Bereich von 1 bis 200 nm aufweisen.

5. Eingefärbte Glaspartikel nach einem der vorherigen Ansprüche,
**dadurch gekennzeichnet,**
**dass** die eingefärbten Glasplättchen in bezug auf den Durchmesser der Glasplättchen in einer Partikelverteilung vorliegen, wobei der Anteil der planaren Glasplättchen in der Fraktion ≥ D₃₀ bis D₁₀₀ der Partikelverteilung wenigstens 50 %, bezogen auf die Anzahl sämtlicher Glasplättchen in der Fraktion ≥ D₃₀ bis D₁₀₀, beträgt.

6. Eingefärbte Glaspartikel einem der vorherigen Ansprüche,
**dadurch gekennzeichnet,**
**dass** die eingefärbten Glasplättchen eine mittlere Dicke von 30 bis 3.000 nm aufweisen.

7. Eingefärbte Glaspartikel nach einem der vorherigen Ansprüche,
**dadurch gekennzeichnet,**
**dass** die eingefärbten Glasplättchen 30 bis 80 Gew.-% Siliziumoxid, bezogen auf das Gesamtgewicht der eingefärbten Glasplättchen, enthalten.

8. Eingefärbte Glaspartikel nach einem der vorherigen Ansprüche,
**dadurch gekennzeichnet,**
**dass** der Gehalt an Alkalioxiden in den Glasplättchen in einem Bereich von 0 bis 15 Gew.-%, vorzugsweise von 0,1 bis 12 Gew.-%, weiter bevorzugt von 0,2 bis 8 Gew.-%, liegt.

9. Eingefärbte Glaspartikel nach einem der vorherigen Ansprüche,
**dadurch gekennzeichnet,**
**dass** die eingefärbten Glasplättchen mindestens eine Beschichtung aufweisen.

10. Verfahren zur Herstellung von eingefärbten Glaspartikeln
**dadurch gekennzeichnet,**
**dass** das Verfahren folgende Schritte umfasst:
(a) Inkontaktbringen von Alkalioxid-haltigen Glaspartikeln mit einer färbenden Metallsalzschmelze, wobei die färbende Metallsalzschmelze wenigstens ein färbendes Metallsalz und wenigstens ein den Schmelzpunkt des färbenden Metallsalzes absenkendes Mittel enthält und die Temperatur der färbenden Metallsalzschmelze unterhalb der Schmelztemperatur der Glaspartikel liegt, für einen ausreichenden Zeitraum unter Erhalt von eingefärbten Glaspartikeln,
(b) Abtrennen der in Schritt (a) erhaltenen eingefärbten Glaspartikel von der färbenden Metallsalzschmelze,
(c) optional Waschen der in Schritt (b) abgetrennten eingefärbten Glaspartikel,
(d) optional Trocknen der in Schritt (c) gewaschenen eingefärbten Glaspartikel,
(e) optional Erwärmen der in Schritt (b), (c) oder (d) erhaltenen eingefärbten Glaspartikel und
(f) optional Abkühlen und Waschen der in Schritt (e) erwärmten eingefärbten Glaspartikel.

11. Verfahren nach Anspruch 10,
**dadurch gekennzeichnet,**
**dass** die in Schritt (a) verwendete färbende Metallsalzschmelze wenigstens ein färbendes Metallsalz und als den Schmelzpunkt des färbenden Metallsalzes absenkendes Mittel wenigstens ein nicht färbendes Metallsalz umfasst.

12. Verfahren nach einem der Ansprüche 10 bis 11,
**dadurch gekennzeichnet,**
**dass** das nicht färbende Metallsalz aus der Gruppe, die aus Natriumnitrat (Na₂NO₃), Natriumsulfat (Na₂SO₄), Natriumchlorid (NaCl), Lithiumchlorid (LiCl), Kaliumchlorid (KCl) und Mischungen davon besteht, ausgewählt wird.

13. Verfahren nach einem der Ansprüche 10 bis 12,
**dadurch gekennzeichnet,**
**dass** die Glaspartikel Glassplättchen umfassen oder sind und die eingefärbten Glasplättchen plan sind.

14. Verfahren nach Anspruch 13,
**dadurch gekennzeichnet,**
**dass** die eingefärbten Glasplättchen in Bezug auf den Durchmesser der Glasplättchen in einer Partikelverteilung vorliegen, wobei der Anteil der planaren Glasplättchen in der Fraktion ≥ D₃₀ bis D₁₀₀ der Partikelverteilung wenigstens 50 %, bezogen auf die Anzahl sämtlicher Glasplättchen in der Fraktion ≥ D₃₀ bis D₁₀₀, beträgt.

15. Verfahren nach einem der Ansprüche 10 bis 14,
**dadurch gekennzeichnet,**
**dass** die eingefärbten Glaspartikel mit wenigstens einer weiteren, vorzugsweise umhüllenden, Beschichtung versehen werden.

## Claims

1. Glass particles coloured with at least one colorant, **characterised in that**
the coloured glass particles are glass platelets with a mean diameter of 1 to 500 µm and the colorants comprise or consist of metallic nano-particles and/or metal oxides, and the glass platelets are planar, and the colorants are present in a concentration in a range of 1 to 55 % by weight based on the total weight of the coloured glass platelets, and the coloured glass particles can be obtained by a method comprising the following steps:
(a) placing glass particles containing alkali oxide in contact with a colouring metal salt melt, the colouring metal salt melt containing at least one colouring metal salt and at least one agent to reduce the melting point of the colouring metal salt, and the temperature of the colouring metal salt melt is below the melting temperature of the glass particles for a sufficient time to obtain coloured glass particles,
(b) separating the coloured glass particles obtained in step (a) from the colouring metal salt melt,
(c) optionally washing the coloured glass particles separated in step (b),
(d) optionally drying the coloured glass particles washed in step (c),
(e) optionally heating the coloured glass particles obtained in step (b), (c) or (d) and
(f) optionally cooling and washing the coloured glass particles heated in step (e).

2. Coloured glass particles as claimed in claim 1,
**characterised in that**
the concentration profile of colorant in the coloured glass platelet decreasesacross the thickness of the coloured glass platelet by less than 10 % by weight, preferably less than 5 % by weight, is constant or increases in the interior of the glass platelet relative to the peripheral region of the glass platelet.

3. Coloured glass particles as claimed in one of the preceding claims,
**characterised in that**
the metallic nano-particles are selected from the group comprising gold, silver, copper, iron, chromium, cobalt, nickel, platinum, alloys of these metals, mixtures of these metals and core-shell particles of these metals.

4. Coloured glass particles as claimed in one of the preceding claims,
**characterised in that**
the metallic nano-particles have a mean size in a range of from 1 to 200 nm.

5. Coloured glass particles as claimed in one of the preceding claims,
**characterised in that**
the coloured glass particles are present in a particle distribution relative to the diameter of the glass platelets and the proportion of planar glass platelets in the ≥ D₃₀ to D₁₀₀ fraction of the particle distribution is at least 50 % based on the number of all the glass platelets in the ≥ D₃₀ to D₁₀₀ fraction.

6. Coloured glass particles as claimed in one of the preceding claims,
**characterised in that**
the coloured glass particles have a mean thickness of 30 to 3,000 nm.

7. Coloured glass particles as claimed in one of the preceding claims,
**characterised in that**
the coloured glass platelets contain 30 to 80 % by weight of silicon oxide based on the total weight of the coloured glass platelets.

8. Coloured glass particles as claimed in one of the preceding claims,
**characterised in that**
the contentof alkali oxides in the glass platelets lies in a range of from 0 to 15 % by weight, preferably from 0.1 to 12 % by weight, more preferably from 0.2 to 8 % by weight.

9. Coloured glass particles as claimed in one of the preceding claims,
**characterised in that**
the coloured glass particles have at least one coating.

10. Method of producing coloured glass particles,
**characterised in that**
the method comprises the following steps:
(a) placing glass particles containing alkali oxide in contact with a colouring metal salt melt, the colouring metal salt melt containing at least one colouring metal salt and at least one agent to reduce the melting point of the colouring metal salt, and the temperature of the colouring metal salt melt is below the melting temperature of the glass particles for a sufficient time to obtain coloured glass particles,
(b) separating the coloured glass particles obtained in step (a) from the colouring metal salt melt,
(c) optionally washing the coloured glass particles separated in step (b),
(d) optionally drying the coloured glass particles washed in step (c),
(e) optionally heating the coloured glass particles obtained in step (b), (c) or (d) and
(f) optionally cooling and washing the coloured glass particles heated in step (e).

11. Method as claimed in claim 10,
**characterised in that**
the colouring metal salt melt used in step (a) comprises at least one colouring metal salt and at least one non-colouring metal salt as the agent for reducing the melting point of the colouring metal salt.

12. Method as claimed in one of claims 10 to 11,
**characterised in that**
the non-colouring metal salt is selected from the group comprising sodium nitrate (Na₂NO₃), sodium sulphate (Na₂SO₄), sodium chloride (NaCl), lithium chloride (LiCl), potassium chloride (KCI) and mixtures thereof.

13. Method as claimed in one of claims 10 to 12,
**characterised in that**
the glass particles comprise or are glass platelets and the coloured glass platelets are planar.

14. Method as claimed in claim 13,
**characterised in that**
the coloured glass platelets are present in a particle distribution relative to the diameter of the glass platelets, and the proportion of planar glass platelets in the ≥ D₃₀ to D₁₀₀ fraction of the particle distribution is at least 50 % based on the number of all the glass platelets in the ≥ D₃₀ to D₁₀₀ fraction.

15. Method as claimed in one of claims 10 to 14,
**characterised in that**
the coloured glass particles are provided with at least one other, preferably encasing, coating.

## Revendications

1. Particules de verre teintées par au moins un colorant,
**caractérisées en ce que**
les particules de verre teintées sont des plaquettes d'un diamètre moyen de 1 à 500 µm et **en ce que** les colorants comprennent des nanoparticules métalliques et/ou ou en consistent, les plaquettes de verre étant planes et les colorants étant présents en une concentration dans un intervalle de 1 à 55 % en poids, rapportée au poids total des plaquettes de verre colorées, les particules de verre colorées pouvant être obtenues par un procédé comportant les étapes suivantes :
(a) mise en contact de particules de verre contenant des oxydes alcalins avec un bain de sels métalliques fondus colorants, le bain de sels métalliques fondus colorants contenant au moins un sel métallique fondu colorant et au moins un agent abaissant le point de fusion du sel métallique fondu colorant, et la température du sel métallique fondu colorant se trouvant en dessous de la température de fusion des particules de verre, pendant un laps de temps suffisant avec obtention de particules de verre colorées,
(b) séparation des particules de verre colorées obtenues à l'étape (a) d'avec le bain de sels métalliques fondus colorants,
(c) en option, lavage des particules de verre colorées, séparées à l'étape (b),
(d) en option, séchage des particules de verre colorées, lavées à l'étape (c),
(e) en option, réchauffage des particules de verre colorées obtenues dans les étapes (b), (c) ou (d) et
(f) en option, refroidissement et lavage des particules de verre colorées réchauffées dans l'étape (e).

2. Particules de verre teintées selon la revendication 1,
**caractérisées en ce que**
la variation de la concentration en colorant dans la plaquette de verre teintée diminue sur l'épaisseur de la plaquette de verre teintée de moins de 10 % en poids, de préférence de moins de 5 % en poids, est constante ou, par rapport à la zone de bordure de la plaquette de verre teintée, est augmentée à l'intérieur de la plaquette de verre.

3. Particules de verre teintées selon l'une quelconque des revendications précédentes,
**caractérisées en ce que**
les nanoparticules métalliques sont choisies parmi le groupe consistant en de l'or, de l'argent, du cuivre, du fer, du chrome, du cobalt, du nickel, du platine, des alliages de ces métaux, des mélanges de ces métaux et des particules âme-enveloppe de ces métaux.

4. Particules de verre teintées selon l'une quelconque des revendications précédentes,
**caractérisées en ce que**
les nanoparticules métalliques présentent une taille moyenne dans un intervalle de 1 à 200 nm.

5. Particules de verre teintées selon l'une quelconque des revendications précédentes,
**caractérisées en ce que**
du point de vue du diamètre des plaquettes de verre teintées, les plaquettes de verre teintées sont présentes en une répartition des particules pour laquelle, dans la fraction ≥ D₃₀ jusqu'à D₁₀₀ de la répartition des particules, la proportion des plaquettes de verre planes est d'au moins 50 %, rapportée au nombre de toutes les plaquettes de verre dans la fraction ≥ D₃₀ jusqu'à D₁₀₀.

6. Particules de verre teintées selon l'une quelconque des revendications précédentes,
**caractérisées en ce que**
les plaquettes de verre teintées présentent une épaisseur moyenne de 30 à 3.000 nm.

7. Particules de verre teintées selon l'une quelconque des revendications précédentes,
**caractérisées en ce que**
les plaquettes de verre teintées contiennent de 30 à 80 % en poids d'oxyde de silicium, rapporté au poids total des plaquettes de verre teintées.

8. Particules de verre teintées selon l'une quelconque des revendications précédentes,
**caractérisées en ce que**
la teneur en oxydes alcalins dans les plaquettes de verre teintées est située dans un intervalle de 0 à 15 % en poids, de préférence de 0,1 à 12 % en poids, encore plus préférablement de 0,2 à 8 % en poids.

9. Particules de verre teintées selon l'une quelconque des revendications précédentes,
**caractérisées en ce que**
les plaquettes de verre teintées comportent au moins un revêtement.

10. Procédé de fabrication de particules de verre teintées,
**caractérisé en ce que**
le procédé comprend les étapes suivantes :
(a) mise en contact de particules de verre contenant des oxydes alcalins avec un bain de sels métalliques fondus colorants, le bain de sels métalliques fondus colorants contenant au moins un sel métallique fondu colorant et au moins un agent abaissant le point de fusion du sel métallique fondu colorant, et la température du sel métallique fondu colorant se trouvant en dessous de la température de fusion des particules de verre, pendant un laps de temps suffisant, avec obtention de particules de verre colorées,
(b) séparation des particules de verre colorées obtenues à l'étape (a) d'avec le bain de sels métalliques fondus colorants,
(c) en option, lavage des particules de verre colorées séparées à l'étape (b),
(d) en option, séchage des particules de verre colorées lavées à l'étape (c),
(e) en option, réchauffage des particules de verre colorées obtenues dans les étapes (b), (c) ou (d) et
(f) en option, refroidissement et lavage des particules de verre colorées réchauffées dans l'étape (e).

11. Procédé selon la revendication 10,
**caractérisé en ce que**
le bain colorant de sels métalliques fondus utilisé dans l'étape (a) comprend au moins un sel métallique colorant et, comme agent réducteur de point de fusion du sel métallique colorant, au moins un sel métallique non colorant.

12. Procédé selon l'une quelconque des revendications 10 à 11,
**caractérisé en ce que**
le sel métallique non colorant est chois parmi le groupe consistant en le nitrate de sodium (Na₂NO₃), le sulfate de sodium (Na₂SO₄), le chlorure de sodium (NaCl), le chlorure de lithium (LiCl), le chlorure de potassium (KCI) et en des mélanges de ceux-ci.

13. Procédé selon l'une quelconque des revendications 10 à 12,
**caractérisé en ce que**
les particules de verre comprennent ou sont des plaquettes de verre et **en ce que** les plaquettes de verre colorées sont planes.

14. Procédé selon la revendication 13,
**caractérisé en ce que**
du point de vue du diamètre des plaquettes de verre, les plaquettes de verre colorées sont présentes en une répartition de particules pour laquelle la proportion des plaquettes de verre planes dans la fraction ≥ D₃₀ jusqu'à D₁₀₀ de la répartition des particules est d'au moins 50 %, rapportée au nombre de toutes les plaquettes de verre dans la fraction ≥ D₃₀ jusqu'à D₁₀₀.

15. Procédé selon l'une quelconque des revendications 10 à 14,
**caractérisé en ce que**
les particules de verre colorées sont dotées d'au moins un revêtement supplémentaire, de préférence enveloppant.
